# EUROPEAN PATENT SPECIFICATION

(11) **EP 3 667 583 B1**
(45) Date of publication and mention of the grant of the patent: **13.05.2026**
(21) Application number: 18211534.5
(22) Date of filing: 11.12.2018
(51) Int. Cl.: G06Q 10/08, G06Q 50/00

(54) **SYSTEM AND METHOD FOR PERFORMING MULTIPURPOSE SERVICE TASKS**
SYSTEM UND VERFAHREN ZUR DURCHFÜHRUNG VON MEHRZWECKDIENSTAUFGABEN
SYSTÈME ET PROCÉDÉ PERMETTANT D'EFFECTUER DES TÂCHES DE SERVICE MULTIFONCTIONS

(43) Date of publication of application: 17.06.2020
(73) Proprietor: Kravchenko, Vladimir, Kaliningrad 236000 (RU)
(72) Inventor: Kravchenko, Vladimir, Kaliningrad 236000 (RU)
(74) Representative: AOMB Polska Sp. z.o.o.

(56) References cited:
- US-A1- 2015 006 005
- US-A1- 2017 313 421

## Description

### Technical Field

The described technology relates to systems, devices, tools, platforms and methods used for the transportation and delivery of cargo, equipment, goods, services and mail, including automated ones, (http://www-formal.stanford.edu/imc/future/delivery.html), postal services, included automated transport and logistics systems and urban freight distribution systems (https://en.wikipedia.org/wiki/Urban freight distribution).

### Background

Freight transport systems, postal systems, delivery systems and urban freight distribution system are the elements of transport infrastructure that are essential for the delivery and distribution of goods (products, materials, components, packages and correspondence) and various services within the urban, sub-urban environment as well at the rural area.

According to various sources, about 22% efficient used time of private cars is spent on shopping, transportation of purchased goods to the buyer's accommodation, as well as transportation of buyers to places of purchase or receipt of goods (including food, consumer goods, clothing, household goods, consumer electronics, etc.).

Given the problems faced by the transport systems of modern cities and the challenges posed by the global process of urbanization, many companies currently are developing related solutions in the field of urban transport environment, including the automation of the transportation process. The overall level of automation in cities is also growing, including production and logistics, as well as the scope of public services, retail, transport and city environment management.

Various inventions and patents registered around solving these problems. For example, patent application No. EP1211658 describe method and system for controlling freight distribution, which provides a method of controlling physical distribution of freight. WO2017064202A1 describe method and system for autonomous or semi-autonomous delivery.

Another example of technology related to presented invention is US Patent 9,256,852 B1, describe Autonomous delivery platform for automated delivery of packages with use of autonomous road vehicle (as well as in in WO2017156586A1).

In US Patent 5931262 A described delivery vehicle multi-tier storage of cargo, in US 7568877 B1 Patent- Cargo handling apparatus.

Another types of inventions, described in US 9,305, 280 B1 Patent and US 20150183528 A1, related to aerial automated delivery systems and methods.

All of the above patents attempt to solve similar problems as the proposed invention. But none of the proposed patents use the modular principle in their system design, following the path of specialization in solving one or a narrow set of transport and service tasks.

The technology under consideration provide possibility to united and combine in one modular system a wide range of automated transportation services, both industrial, municipal and consumer - oriented, uniting them into a single automated transport and logistics system and implement a number of transport and service products that use similar principles of operation, implementation and development, on one unified modular transportation platform.

Providing the effective implementation, the technology allows to automate and simplify a significant part of the logistics and transport processes in an urban, suburban and rural environment, associated with the transportation of goods and delivery of services, to increase the efficiency, accuracy and adaptability of transport and delivery of goods and services, to implement the option of delivery of cargo, orders and goods to final consumers both to their location, and to the selected delivery point without regard to the recipient being at this point upon delivery and without blocking delivery vehicle at the delivery point until the recipient arrival (split times of delivery and receipt), to significantly reduce expenses for customer and services consumer for transportation, to save time, inefficiently used by the population for the transport of goods from the places of purchase to the places of use, to increase the efficiency of the urban transport system, to improve the environment, to save space occupied by fixed infrastructure for the delivery of goods and increase the attractiveness of transport services for delivery of goods and services.

The described technology may be used as a multifunctional platform and framework to create a transportation network for delivery of goods and performance of a wide range of services related to the transport functions, in local areas, as well as for building a network of transport systems linking several/many cities and territories into a single (global) transport system, creation of new generation postal and courier services aimed at both the local and the global transportation of objects and services. Due to the wide range of possible types of transport modules, used as a parts of the system, and variants of their application on the basis of technology may be created and developed a variety of services for organizations, municipal authorities and population. Due to the localization of the main tasks associated with transportation and transportation security at the unit level, the developers of new module-based services may enjoy greatly simplified tasks of developing and reduced costs and time needed to implement new solutions. Each service newly put into operation increases the overall efficiency of the whole system usage and creates multiplier effect that with increasing efficiency reduces overall costs to ensure the work of the whole system and network. At the same time the creation of new services is implemented on the basis of this transportation platform that may be accessed by external developers community. Also, the system may act as a component of a large-scale and global services (for example, the postal service, the service of express delivery and automated service delivery orders in the retail sector) and to perform certain role in these global services (for example, solve the problem of last mile delivery of parcels and correspondence, or perform the function of processed orders delivery from the outlet to the buyer). US2017/313421A1 is part of the prior-art.

### Summary

The invention relates to a system for performing multipurpose service tasks, the system comprising:
- One or more transport modules, wherein each transport module comprises:
   a housing defining the shape and volume of the transport module,
   means for performing at least one task located inside the housing, and
   means for fixing and locking the transport module to a storage slot,
- geographically distributed network of stationary located storage slots for storing transport modules comprising means for receiving at least one transport module, wherein the housing of the transport module is at least partially accessible after fixing and locking transport module to the storage slot,
   wherein the means for fixing and locking the transport module to the storage slot and the means for receiving at least one transport modules are standardized within the system. Preferably, at least one transport module comprises compartment to accommodate the payload, located inside the housing.

Preferably, the payload compartment is in the form of basket for goods or cargo, slidable

Preferably, at least one module comprises means for storing and/or generating energy and means for transmitting said energy.

Preferably, system further comprises at least one transport unit for transportation of transport modules to the determined storage slot or from storage slot to the place of storage and service of modules, being a vehicle of any type.

Preferably, transport unit is unmanned automated vehicle (UAV) of any type.

Preferably, transport unit is equipped with means for receiving transport modules.

Preferably, at least one transport unit comprises manipulators and/or capture devices for capturing, holding and/or manipulating the transport module.

Preferably, elements of the system comprise a unique device ID accessible for remote reading.

Preferably, elements of the system comprise means for data transmission and/or storage and/or processing.

Preferably, the system further comprises computer based fleet management system (FMS) for managing elements of the system.

Preferably the transport unit is suitable for acting as a universal transport platform for transportation and delivery of many types of transport modules.

The invention relates also to a method of service delivery performed in the system according to the present invention, wherein services are delivered to a user in form of transport module configured to perform chosen task delivered to a storage slot chosen by the user or system or to any other place chosen by user or system.

Preferably, the transport module may be delivered by different transport units and/or transmitted from one transport unit to another in the process of moving to a slot, user or place of modules storage.

Preferably, services are delivered to the dynamic object or subject/user, that are in motion and having a dynamically changing coordinates, determined electronically and remotely.

Preferably the transport unit acts as a universal transport platform for transportation and delivery of many types of transport modules. The invention is defined in the appended claims.

### Brief Description of the Drawings, plans, schemes

Further details and features of the present invention, its nature and various advantages will become more apparent from the following detailed description of the preferred embodiments shown in a drawing, in which:
- Fig.01/21- Transport module general architecture
- Fig.02/21- One of possible embodiment of transport module main scheme
- Fig.03/21- Computing devices associated with certain example of module embodiments
- Fig.04/21- Transport autonomous unit and platform general architecture
- Fig.05/21- Possible automated transport unit transformation modes diagram, describe certain sample embodiments of present technology
- Fig.06/21- One of possible embodiments of transport unit main scheme
- Fig.07/21- Main system architecture elements diagram, depicting certain sample embodiments of present technology
- Fig.08/21- Block diagram depicting of a possible construction of server system that may be used accordance with certain example embodiments
- Fig.09/21- Possible system communication network scheme in accordance with certain example embodiments
- Fig.10/21- Main functional architecture, illustrate certain sample embodiments of present technology
- Fig.11/21- Transportation method in different scenarios in accordance with certain example embodiments (1)
- Fig.12/21- Informational In/Out interfaces diagram, describe certain sample embodiments of present technology
- Fig.13/21- Transportation of multiple modules on track, describe certain sample embodiments of present technology
- Fig.14/21- Transportation of multiple modules on cargo airborne ship with usage of autonomous flying drones, describe certain sample embodiments of present technology
- Fig.15/21- Transportation method in different scenarios in accordance with certain example embodiments (2)
- Fig.16/21- Transportation method in different scenarios in accordance with certain example embodiments (3)
- Fig.17/21- On-motion docking, illustrate certain sample embodiments of present technology
- Fig.18/21- Different options of technology usage embodiments (1)
- Fig.19/21- Different options of technology usage embodiments (2)

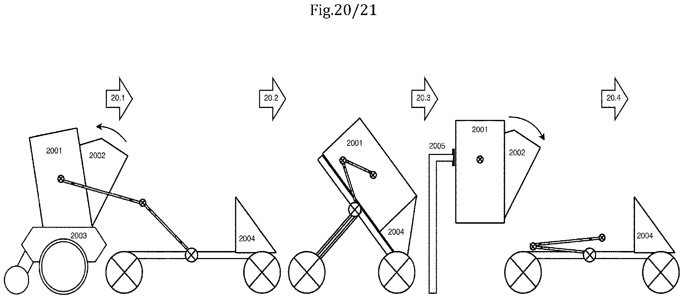

- Fig.20/21- Different options of technology usage embodiments (3)
- Fig 21/21 - One of possible embodiments of transport module /unit (slot) fixation and blocking sub-system

### Detailed description

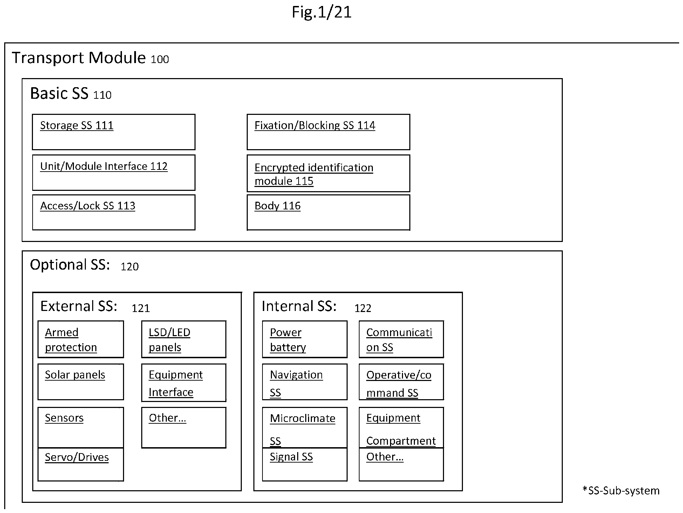

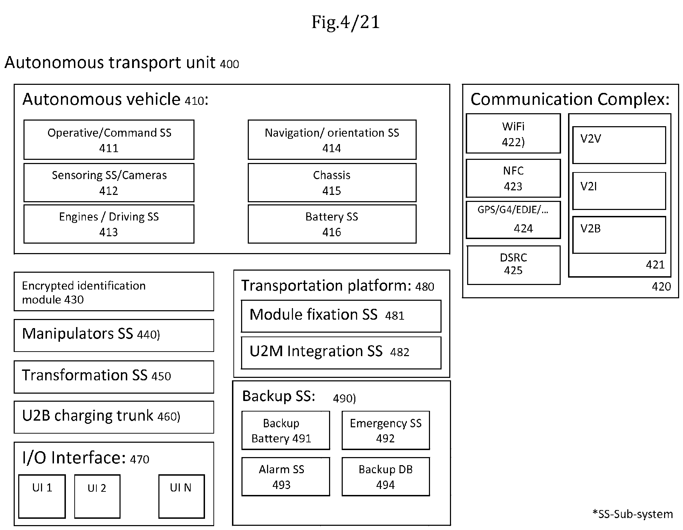

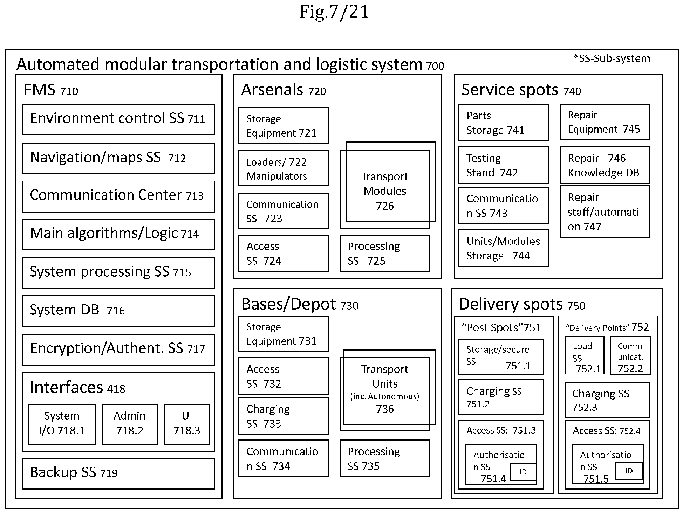

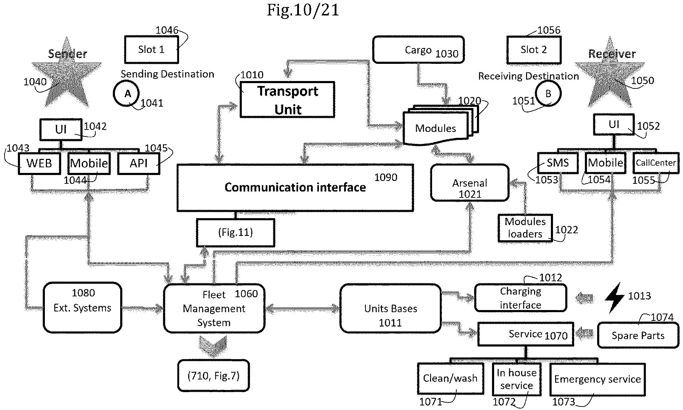

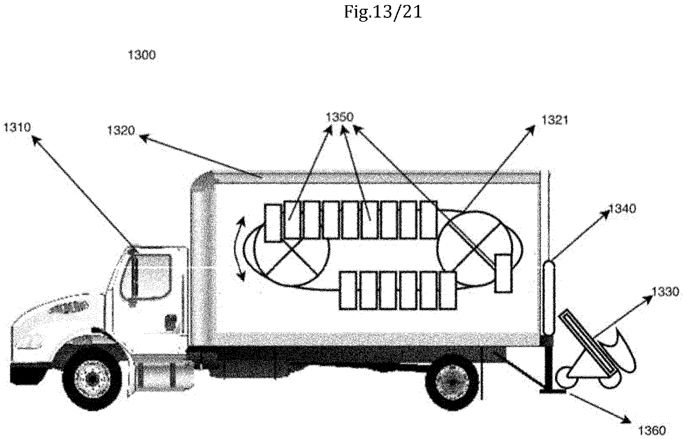

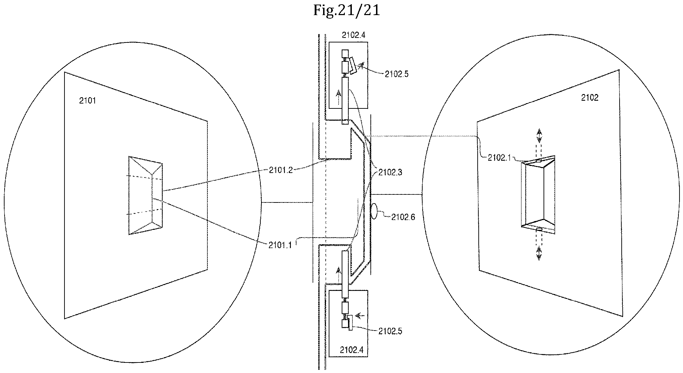

The described technology include the construction principles, operation principles and possible applications of transport and service system and network and system based on the use of automated modular transport platform includes various types of autonomous module transport containers, the description of one of the possible construction of which is shown in **Fig.01/21,** its concept, the basic units, elements, sub-systems and option packs, variety of methods (including partially or fully automated) for transportation of cargo, goods and services with the help of autonomous container modules **(Fig. 01/21),** concept and specifics of and operation of the transport units of various types and principles of motion and controlling, one of the possible embodiment of which is shown on **Fig. 04/21,** adapted for the transportation of container modules, design and principle of functioning of automated transport and logistics modular system **(Fig. 07/21),** combining all possible modular elements for performing various transport, logistic and service tasks, including the description of the main elements of its infrastructure and the ways of their interaction **(Fig. 10/21),** as well as the uses of this system, platform and container modules for transportation, delivery, storage and dispatching of goods, products, orders and services as well as description of options of the described technology for a wide range of transport and service tasks **(Fig. 13- Fig. 19/21 ).**

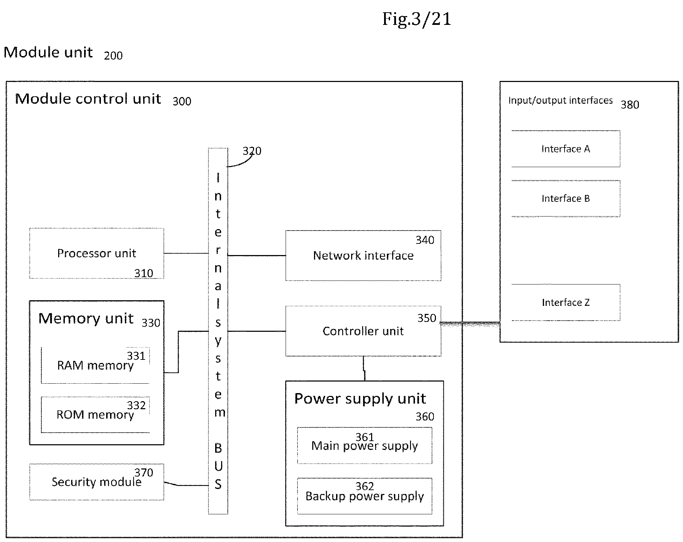

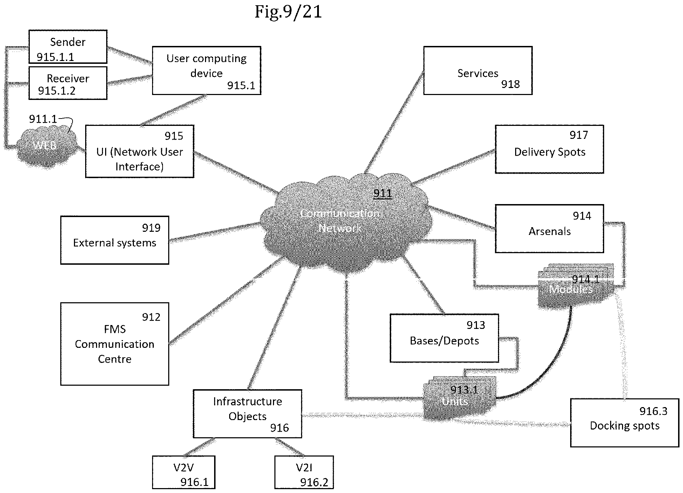

The described technology may include a set of electronic **(Fig.03/21, Fig.08/21)** and mechanical devices, software, sensors and technical means to collect and exchange information, as well as communication lines and channels **(Fig. 09/21),** providing the solution for tasks of automated transport for individual commercial, service and private goods and groups of goods, as well as the performance of the functions and actions associated with the movement of objects and resources within urban, suburban, rural areas and territories of businesses and organizations. These tasks may include the delivery of commercial, private and other goods, orders and parcels to the addressee, delivery of luggage of passengers, the movement of inventory, components and parts between storage systems and production sites, automated movement of inventory, components and tools within a single enterprise and between enterprises, delivery of consumables, energy and communication sources to places of operation (repair, recreation, liquidation of consequences of failures and accidents, etc.). Also such issues of the movement of objects and tools within the urban, suburban and rural areas may include environmental monitoring task, task of automated scanning for traffic and parking violations by motor vehicles, scanning environment for the condition of the road surface, the level of noise, lighting, vibration, the task of scanning the pedestrians, for example in order to check the wanted persons against databases, as well as other tasks performed by a complex of specialized equipment and technical means. The technology in this case solves the problem of transportation of such a set of devices to the site of monitoring or on the route specified in the monitoring and service tasks. A wide range of services, required movement and transportation process, may be implemented on the base of use described technology as a movement and transportation platform. Scope of application technology includes, but is not limited to these examples. At the same time anywhere herein the words "includes" or "including" means "may have", rather than "shall have", allowing a certain variation in the configuration, functionality and design features. Wherever the text for a description of the design, operating principles or devices specifies the term "optionally", it means the possibility of using this technology without these elements that are optional depending on the particular mode of use of the technology.

The described technology embodiment, the modular automated transportation platform, may include two separate basic elements - automated transport container-module **(Fig.01/21),** transport unit **(Fig.04/21)** include autonomous options, and various additional possible elements.

Automated transport container module is a standardized ( in dimensions of integration platform and integration tools) optionally portable shipping container for placement of payload for different purposes in the inner sheltered space (including freight, portable sources of resources, equipment etc.) equipped with devices and systems to ensure the safety and functioning of the payload, equipped with mechanisms, devices, interfaces and sensors to communicate with external elements and objects (including authentication of access to the contents of transport module), the ability to be installed on and integrated with various devices and systems (including vehicles of various types and configurations, fixed slots for safe storage of containers, smart shopping systems such as "smart shopping cart", specialized systems for loading, unloading and storage of modules, etc.) for perform a wide range of transport, service and information tasks. Depending on the specific tasks the design of a specific container module intended for its implementation may vary. Sets of container module to perform various tasks are stored in a geographically distributed network of special module storage centers (arsenals), and provided to the users depending on their tasks with the help of the transport units (vehicles of various types, principles of movement and control, equipped with transportation platform-stand for installation, fixing the modules and optional devices for integration of energy and information system of the module with energy and information system of the vehicle), under the control of a computerized fleet management system (FMS), which is an integral managing part of the automated transport and logistic modular system, executing functions of management and coordination of movement and actions of transport platforms and its elements in mutual and separate mode, controlling elements of associated infrastructure and providing secure communications within the system network and communications with external systems and users.

The customer places an order for transportation of cargo, goods or services delivery to the recipient (which may be the same person or not). The automated computing system (FMS) determines the parameters of the module to carry out the order, determines the specific module from the services arsenal available for a particular order, provides the module at the disposal of the customer or the sender of the order in a certain place at certain conditions determined by the system (on the vehicle, on a stationary slot etc.), and also provides the information, associated with access to the compartment for loading cargo into a module (including transmitted by mobile electronic device of the user, including automatically in mode of data exchange between module and mobile electronic device of the user or with other available method of communication). To deliver services the module is selected with the necessary properties and related equipment. The customer or the goods/cargo sender puts the goods or cargo into the module. The system builds a program task based on the order data to deliver module with the cargo to the recipient. The module after loading the cargo is delivered to the recipient. The system send the recipient information to identify module with the order, the estimated module/order delivery time and place, as well as information for accessing the contents of the module, associated with a specific recipient, a specific module and a specific cargo (order). Accessing information also may send to recipient after module arriving. The recipient, using the information received, locates and identifies the module delivered, enters required information via the information input interface to access the content of the module, associated with the order, accesses order and takes it. Upon delivery of services the recipient is provided access to the service provided by a module delivered, within the parameters specified in order. After receipt of the order or service by recipient the module is evacuated from the place of order delivery to the arsenal for storing or for reuse in another orders. The described technology allows for the implementation of the delivery of the goods or provision of services in the absence of the recipient (in automatic mode/ M2M mode).

### Main technology elements and components:

One of the two basic elements of automated modular cargo and service system is the *autonomous cargo and service transport container module* (transport container module or transport module), which depending on the specifics of the tasks may be equipped with various electronic and mechanical systems, is made of different materials with different industrial manufacturing technology, has standardized landing size, accessories for securing and handling of the module, the ability to integrate with a variety of vehicles, systems, platforms, stationary and mobile objects of infrastructure outfitted for integration with the module, and to perform unified and related tasks in integrated form.

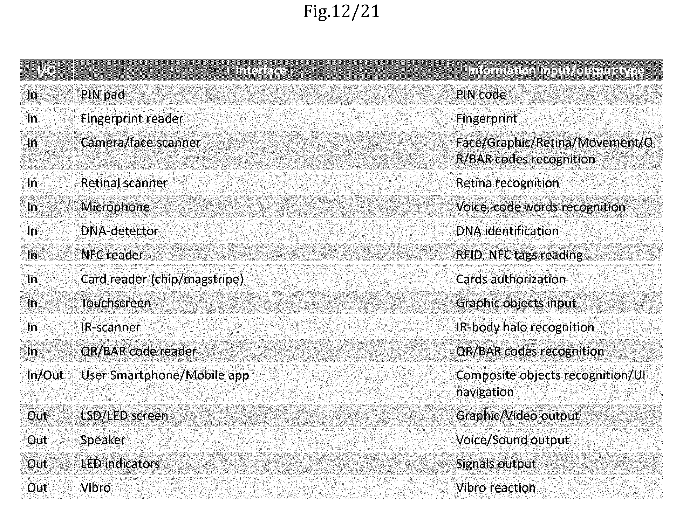

*Autonomous cargo and service transport container module* is a self-contained unit for transporting a payload (cargo, goods, components, equipment, materials, resources, machines etc.) that has the standard dimensions of the integration platform (stand), matching the landing slot and interaction interface on the transport unit (vehicle), and serving to perform various tasks, the specifics of which define the functionality design and internal and external engineering of the module. The size and dimensions of the module may vary and are limited by functionality, dimensions of cargo and equipment and capabilities of the vehicle carrying the module for its transportation and loading. However, the description of technology implies that the local implementation includes selection of several options of cargo module size, optimal for performance of most of the potential transportation tasks in the territory or in field where the technology is implement. **Fig. 01/21** shows the schematic diagram of the structure of one of possible embodiments of autonomous cargo container module, which may include basic **(110)** and optional **(120)** elements depends to module functional purpose. Transport module may act as a basket **(111)** for the secure transportation of at least one cargo unit or several cargo units, including distributed in different trays and pallets inserted inside basket to perform a modular cargoes addressed to receiver, combined basket/cassette for separate transportation of several goods to one or more recipients with a separate handing, the loading platform for placing of other machinery and equipment on it, as well as robots and drones, instrument station, carrying a set and totality of tools to perform a variety of useful work **(121, 122)** (power supply, onboard command system, memory units, tools for scanning of environment, objects and phenomena, observation, etc.), a robotic platform with a variety of manipulators to perform the mechanical actions of varying complexity and purpose, etc. Transport module according to the functions it performs may be equipped with different systems and their combinations: systems of locking and unlocking the module (system for control of access to payload with automated locking/unlocking servo drive, with other possible types of drives) **(113),** interfaces for exchange of graphics, text, audio, digital data, and other information **(121),** LCD panels, readers of biometric indicators, built-in readers of BAR-codes, QR-code, RFID, other identifiers (possible configuration options of possible external interfaces of container module are shown in **Fig.12/21),** built-in weights, sub-systems, onboard climate control, instruments of for acceptance and authorization of payments from various payment methods, monitoring and tracking systems **(122),** objects capture systems and tools, including sensors transmitting tactile sensations, odor recognition systems, sound and voice interface with a speech synthesis function and without it, NFC-markers and receivers (readers), remote module identification system comprising a unique module ID **(115),** other systems and sub-systems depending on the intended use of the module. Possible functional design of transport module may include, but is not limited to these elements. Besides the fact that cargo transport module is the base part of the transport system, it may also be included as a multiplatform component in the related external systems and platforms, interacting with the transport system (as part of "smart shopping carts" system, for example), or acting autonomously as an independent tool of transportation or delivery.

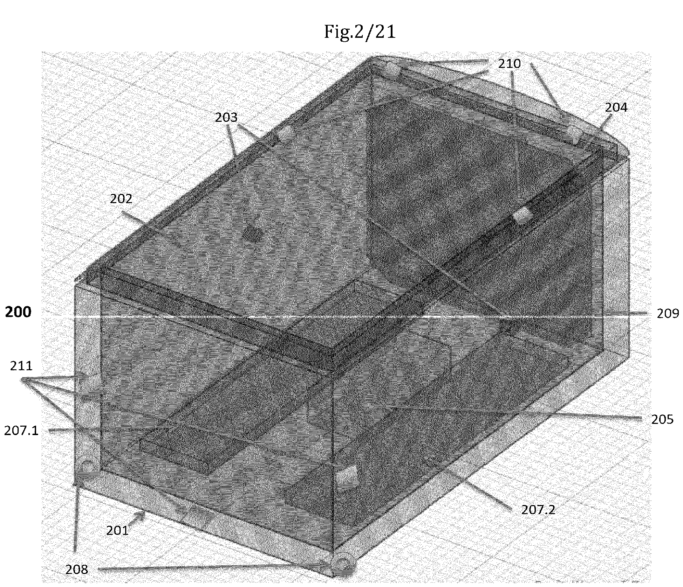

One of the possible embodiments of the container module is presented in **Fig.02/21,** in which the mono-basket **200** for cargo and goods with an airtight lid **202** is built into the overall body **201** and may be pulled out of the body for loading cargo and goods. Lid of the basket may comprise additional elements - LSD information panel, a sensor touch pad panel for information exchange, or a solar panel to charging the battery, for example. When lid is closed, the basket is fixed by locking devices **210,** prevents unauthorized access to module content. Overall body **201** is provided with grooves **211** for mounting on transport platforms for different purposes (such as "smart shopping cart"), mounts for capturing **203** and pointing mounting devices for integration with the transport units and slots **205** with locking castle, located on the overall integration site (overall body side, designed for docking with the platform of the transport unit, slots for storage and other devices). This device may additionally be equipped with an interface for charging from the power grid of the transport unit or slot, including contactless type. Inside the overall body **201** in the container, in addition to the basket is one or more hardware compartments **(207.1, 207.2),** which may be placed panels for electric power for module systems, provide a micro-climate system, and other systems and devices required for the functioning of the container module **200.** Additionally, the internal housing cavity may oversized command module **204** containing the computer system, a communication module, an antenna, an identification module for identifying the container module comprising a unique module ID, the information storage devices, and other functional elements of the control system of the container module. The command module associated with the system interface and external sensors, which are located on the outer surface of module overall body **201.** In addition, optionally container module may be equipped with devices for portable transportation - retractable wheels **208** and the carrying handle **209.**

On **Fig.03/21** an example of the implementation of the module command/control electronic system **300** is presented, which may optionally be included in the configuration of the module **100** (in the optional internal equipment **122)** on **Fig.01/21.** As a possible option of the placement of the on-board module command system, compartment **204** is shown on **Fig.02/21.** However, depending on the implementation, the command system may be located in other parts of the module or may have a distributed structure. Depending on the specific implementation of the technology, the module command system may be implemented either on the basis of a single electronic device or on the basis of a set of electronic devices linked together by a single bus or via a network interface. In the example of implementing the module command system, it has at least one processor, whose role may be performed a different types of processes depending on the specifics of a particular implementation of the technology: general purpose processor, microcontroller, reconfigurable processor, a graphic processor (GPU), a multiprocessor or any other type of processor unit or device which may perform a commands processing and execute instructions functions (for example various controllers, gated logic like field programmable gate array (FPGA) etc.). Depending to the type and specification of the processor used in Module command system 300 and functions implemented on processor unit may be implemented various types of ISA (instruction set architecture), for example SPARC, MIPS or any other type of ISA. In multiprocessor systems each processor unit may implement it's own ISA (the same or not with other processor units). Depending on the particular implementation processor unit may be performed as a separate computing device, as a set of processing units, separate or combine in one device (chip), with different levels of hierarchy, subordination and interaction between units and processors, with or without combination of the various extra devices (microcontrollers, memory units etc.) or in any combination thereof. According to certain technology embodiments, processor unit together with other components may be the parts of virtualized computing device which executing within one or several other computing devices. Processor unit may operate with data from various data source - data storage (memory unit **330** for example), data flow from various sensors (internal, external and outstanding), data exchanged thru network interface **340,** embedded, preloaded or calculated data and program commands of processor unit **310** itself, other data from different data source and with combined data from various data sources.

System bus **320** may be or may be not include as a part of module control unit **300** and may play a role of a single computer bus that connects the major components of a computer system, combining the functions of a data bus to carry information, an address bus to determine where it should be sent, and a control bus to determine its operation. In certain embodiments of technology system bus may be replaced on a variety of separate buses adapted to specific needs or not present at all.

Module control memory unit **330** may consist of one ore more single or multi memory units, non-volatile or volatile types, in any possible combinations according to specific embodiments of present technology. The option of technology embodiment illustrated on **Fig.03/21** includes two types of memory in memory unit - RAM memory **331** and ROM memory **332.** But for different embodiments of presented technology it may be a various types and various versions of memory units in different combination or present as a single memory unit - flash drive, various types of ROM memory (RON, PROM, SPROM, etc.), various types of RAM memory (RAM, DRAM, SRAM, SDRAM, etc.). Also memory unit **330** may work in conjunction with or include one or multiple nonvolatile memory store device (data storage or else).

Network interface **340** may be a part of module control unit which role is to exchange data between module control unit and other devices and units attached to the network. To the network interface **340** it may be attached one or several in-built or external network communication devices responsible for data exchange between control module **300** and other devices and systems connected to network, on various different data exchange modes (wired or wireless, V2V, V2I, V2P, V2X etc. via LAN, WLAN, Wi-Fi, Bluetooth etc.). The basic options of network interface is to pass data, connecting and disconnecting with other devices and units. Network interface may exchange data between module control system and other transport system elements (exchange parameters with FMS and transport unit, receive program tasks, orders and commands from FMS, send notifications and alerts, exchange secured ID information, download software updates etc.) directly or with usage of connected external network devices.

Controller unit **350** may be a separate computing device or part of processor unit **310** which responsibility is to interfaces control unit with peripheral devices (internal **122** and external **121** on Fig.1/21, power supply, sensors, data exchange interfaces described on **Fig.12****/****21** or another one, electric drives, electric lockers etc.). Controller unit may use as a main or supported system bus in some of options of module control units implementation. As an example of peripheral devises which may connect and managed by controller unit may be module access/lock subsystem **113** (Fig.01/21), unit/module power interface **112,** module fixation/blocking subsystem **114,** LSD/LED panels **121,** navigation and signal subsystems, external sensors, cameras, other module subsystems. It may be at least one, multiple or single controller units on module control system depends on particular embodiment of technology. The peripheral devices may connect with controller unit **350** trough input/output interfaces **380** or directly. In/out interfaces **380** may use various standard computer connectors (USB, RJ45 etc.), specific connectors, multiplied connections and other form of interactions with peripheral devises.

Power supply unit **360** may be integrated thru controller unit **350** (as described on **Fig.03/21),** integrated thru the system bus **320** or use other possible ways of integration. It may contain main power supply **361** (chemical batteries of various types and capacity, physical power drives and converters etc.), backup power supply **362,** used for the guaranteed uninterrupted power supply of the module control system and its elements, additional sources of power (solar panels, external ac/dc interface, transport unit power interface etc.), which interact with power supply unit trough controller unit **350** or directly.

Security module **370** may use as a separate or integrated part of module control system **300** for data encryption and save data exchange within module control system and other module subsystems and external devices. It may contain a data memory drive for storing security data, encryption keys and algorithms, various security systems and elements (software and hardware) for data protection, one or several hardware security modules (HSM), other elements depending of specific technology embodiments. Security module may use for protect data exchanged from compromising, include device ID identification data exchange, other protected data, system electronic signature, PIN protection, any passwords and keys protection, systems and users identifications, other data security purposes. Security module **370** may use preset uncopyable software and media data or use a special separate secure interface for data uploading.

The second key element of described technology, *Transport units, and their schematic design* in one of the possible options of implementation are shown in **Fig.04/21** and **Fig.06/21,** but more widely they are represented by any types of vehicle (including unmanned autonomous vehicle - UAV, aircraft, surface or underwater vessel) equipped with a integration and transportation platform **480** or other vehicles, unified for placing of one or more autonomous transport modules on it, tools for loading, unloading and fixing the modules on platform **480,** as well as optionally able to be equipped with interfaces to integrate with the energy and information system of modules, capable to have communication and navigation system for determining the unit location and its connection with the transport system elements, as well as a unique assigned ID, recorded in a special secure readable module **430,** to identify the unit as an element of the system, interface of transfer of data on this ID to other elements of the transport system and device for ID identification to other elements of the transport system. At the same time integration platform **480** may act as an adapter, on the one side unified for integration with the vehicle, and on the other side unified for integration and transportation of one or more modules with specific dimensions. With the change of cargo platforms the same transport unit may carry cargo modules of different sizes and for various purposes (as well as different numbers of transport modules).

As a possible example of the described technology implementation was consider a version of implementation of the transport unit on the basis of an autonomous self-driving vehicle-rover **410,** which has a cargo platform for the integration and transport of a cargo module of the "Shopping basket" type, specially designed for the transportation of autonomous transport modules and specialized as part of the proposed technology. However, this does not preclude the use of any other transport platforms for transporting cargo modules, including non-autonomous, including manual loading and unloading of modules and other methods of transportation.

**Fig. 04/21** is a flowchart of the design of automated cargo transport unit **400,** having an electric drive, a integration platform with dimensions standardized with cargo module **480** size with integration bus **482** to integrate the cargo module with the energy and information system of vehicle (which may be contact, contactless and combined) and (optionally) a robotic device **440** to loading/unloading of transport module and device for its fixation **481.**

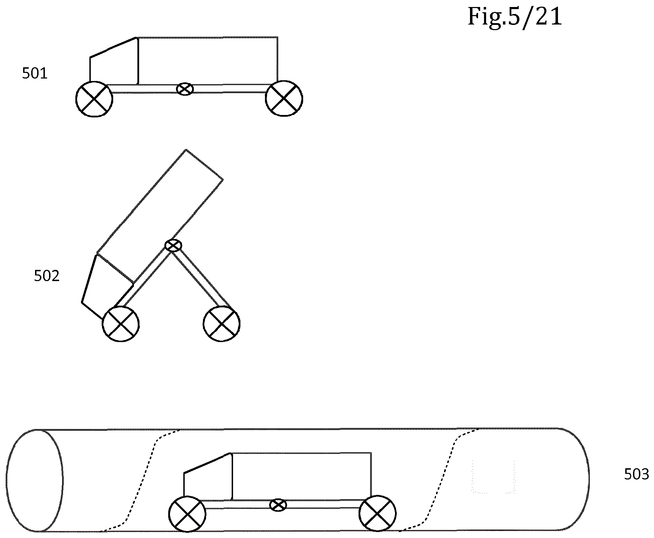

The standard on-board equipment of autonomous transport unit may include a communication station **420** to communicate with a central fleet management system (FMS), transport infrastructure and other autonomous units and vehicles **421,** carried out by a variety of ranges and modes of communication **(422, 423, 424, 425** and other options), a set of sensors **412** for monitoring the state of the environment, road surface and road conditions, as well as the navigation system **414** for the transport unit orientation in space and information-computing system with software algorithms **411,** that is used to processing incoming information (from the sensors, FMS and other objects) and building a program for management of movement and behavior of the unit and the optimal performance of the board tasks. The basis of the autonomous transport unit is a self-driving autonomous vehicle **410.** However, unlike the autonomous motor vehicle and other vehicles used for transportation the autonomous transport unit **400** is designed for movement in a variety of modes of urban traffic and different traffic zones: on public roads and highways, on the pedestrian areas and sidewalks, on bike paths and bike lines, on special overpasses, serving to move the transport units separately from the other objects of traffic (through pipes underground/above ground), indoor and covered areas. Also, the transport units may be adopted to use objects of special infrastructure (ramps, elevators, platforms for wheelchairs and bicycles), as well as a line of public transport (special metro cars, special lines of buses and trams etc.). In various traffic areas the transport units use different speed mode, adapted for the environment, and also may be transformed via the transformation sub-system **450,** modifying its geometry in order to optimally match the environmental conditions in which they are moving. **Fig. 05/21** shows the variants of possible transformation of the independent rover unit previously described as the example of transport platform prototype to adapt to movement in different traffic areas. To move on the roads and streets the unit (depending on the design of the unit) may take the horizontal "bolide" shape **501** for optimum high speed, reduced drag and efficient high-speed maneuvering. For movement in the pedestrian areas and bicycle paths the transport unit may change the orientation of the working chamber and the module to the vertical or inclined **502** (rotation range up to 90 degrees or more from the horizontal) for greater safety of pedestrians and others subjects of traffic, in order to minimize space requirements, as well as for ease of loading/unloading of transport module or of cargo from module. This provides the ability to vary the different speed modes of the unit for different transport areas. For different types of units (e.g. for trucks) the system stipulates the limit of movement in certain areas. The identification of unit in the system is carried out on the basis of the unique ID assigned to the unit as any other unique elements of the system and stored in the identification system **430, Fig. 04/21.** The autonomous transport units may be driven either by self-contained on-board algorithms, or remotely by the operator, or using combined method, or in automated platoons. Charging of board batteries **416** of the unit is carried out through charging port in parking mode **460,** and through recovery drive system and on-board solar battery in driving mode, or charging remotely wirelessly "on the air" (optional). To interact with external systems and users the units may optionally be equipped with a variety of information input/output interfaces **470,** including among other things signal system interfaces (signal side lights, horn, etc.), as well as use of information input/output interfaces in the integration mode of transport modules **113, 122** in **Fig. 01/21,** configuration options for which are presented in **Fig. 12****/****21****.** The unit may be optionally equipped with back-up and emergency systems to improve the reliability and safety **490.** The unit may be equipped with power drive in form of one or more electric motors **413** connected to the chassis **415** either directly or via gear system and powered by onboard batteries **416.**

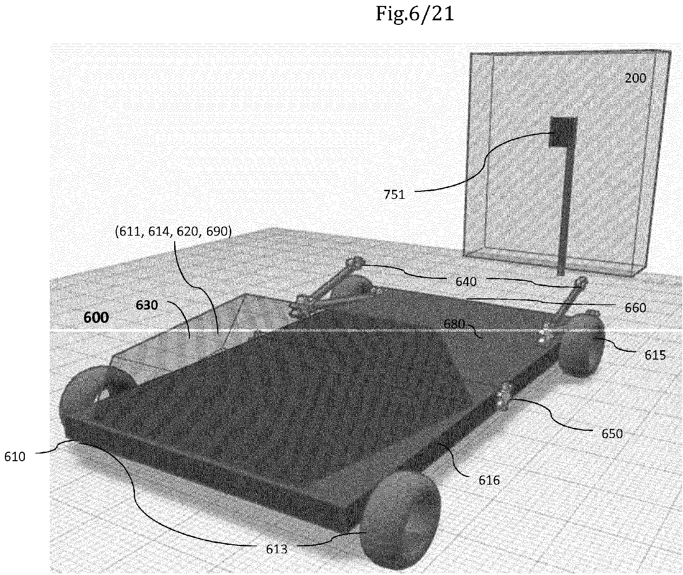

On **Fig.06/21** is a schematic diagram of an autonomous rover prototype **600,** acting as a transport unit for automated transport and loading of container modules. The basis design of the rover may be wheeled chassis **615** and that may have an arbitrary number of wheels. For example, present example shows the device on the basis of a 4-wheel chassis **610.** However, the rover may be equipped with 3-wheel, 2-wheel, one-wheeled chassis with stabilizer system of gyroscopes and balances, as well as chassis variants having more than 4 wheels. Instead of the wheel chassis may use other options (trucks, magnetic cushion, etc.). In present embodiment, a complete set of 4 wheels base chassis has a drive to each wheel by a separate electric engine **613** (in the version of "motor-wheel") fed from the onboard battery **616,** built in a constructive frame of chassis. The frame has a rover chassis transformation module in the transverse axis **650,** equipped with electric drive and allows to transforming the rover to move in different transport areas. Rover may have an equipment/apparatus compartment in the front, which houses the rover control system **611,** managed by autonomous algorithms, navigation and positioning system, rover communication system **620,** backup systems and devices **690,** other devices and mechanisms **614,** needed to control the autonomous movement and control of the rover unit, and located on the outside and integrated into the overall unit body hardware sensors and scanning devices necessary for the implementation of the rover self-driving functions. Platform **680** to accommodate container module may be equipped with a gripper **(481)** for fixing and integrating container module to the rover platform, as well as charging interface (optional). Rover unit also may be equipped with an identification module **630** containing the unique ID of unit in the system, available for secure reading by other authorization elements and systems. The platform **680** is also provided with a system of paired synchronous manipulators **640** for In-gripping, handling and retention of module **200,** for example, during the acceptance of module from the storage slot **651.** The landline cell to charge the battery during parking rover is also provided with the port **660** for slot-in recharging from stationary power systems.

**Fig.07/21** is the schematic diagram of one of possible embodiment of the autonomous transport and logistics system **700,** key components of which in addition to the container modules **726** are the transport unit **736** is *Fleet Management System*/*FMS **710,*** network of bases-depots for deployment and charging of transport units ***730**,* centers of storage and exchange of modules (arsenals) ***720**,* as well as the communication system consisting of various elements of the system infrastructure, responsible for system communication ***(713*,** ***723, 734, 743, 752 B**)**,*** network of stationary points of the module storage and the issuance of cargo ***750*** and service stations (service centers) ***740**.*

*FMS*/*Fleet Management System **710*** in Fig. 07/21 is a computerized command system, including a set of software and electronic equipment **714, 715,** data storage **716** and user and system interfaces **718,** responsible for the overall coordination of the functioning of the fleet of transport units and modules, their status and telemetry, processing of orders for the implementation of transport functions, interaction with customers and receivers, collection and processing of telemetry **711,** storage and processing of data coming into the system, formation and control of the implementation of program transport assignments, laying the optimal route **712,** emergency management, control of the interaction between all the elements of the system **713** and the formation of the system and user reports, as well as encryption and secure data sharing and storage **717.** To ensure the reliability and continuity of service the FMS may be provided with duplicate/redundant sub-systems **719** or to operate as part of a replicated FMS network.

*Bases*/*depot* (block ***730*** in **Fig. 07/21)** for basing transport unit platforms are the places of permanent deployment of transport units **736,** in which the units may be stored **731,** charged/refueled **733** and are served while waiting for transport assignment from FMS. The depot also (optionally) may include the storage arsenals of transport modules **720** for various purposes, as well as automated systems for automatic service of transport units and modules (washing etc.) **740.** The depots may be located in a public or private areas (for example in the form of isolated areas in public, private or official parking places for parking and charging of transport units in the case of use of electric vehicles), or as a self-contained underground, ground-based and container units, including single and modular, partially or fully automated **735,** with automated access system **732** using ID identification and integrated communication center **734.**

*Arsenal* **(720** in **Fig. 07/21)** is the infrastructure element, responsible for storage, current power supply, basic maintenance of transport modules **726** and its loading on/from transport units. It may be a separate element of the infrastructure, as well as part of the base/depot **730** for the dislocation of modules **726.** It may be a part of the base/depot structure **730** (selected area in the depot, the element of automatic depot - in the case of integration into the depot structure), or a separate structure (separate specially equipped room, isolated specially equipped space, including container or modular type), which serves as to perform functions related to the provision of permanent availability of modules **726** to perform transport functions - storage, sorting, delivery and reception, security, charging, assessment of technical conditions (telemetry collection, scanning) and routine maintenance (washing and cleaning) of transport modules, as well as outfitting the service transport modules with the resources and equipment needed to perform the service functions (batteries charge, consumables, etc.). There may be (optionally) a subsystem of automatic loading and unloading **722** of modules into units, a subsystem of storage of unused and reserved modules **721,** identification and secure access subsystem **724** to filter access to the modules by ID, as well as its own communication sub-system **723** and the sub-system of processing the collected and received data **725,** responsible for communication with the FMS, for collection and pre-processing of data from the modules, as well as for the automated management of processes and mechanisms that are part of the arsenal.

*Cargo delivery and loading points* (block **750** in **Fig. 07/21)** are the elements of the system infrastructure responsible for storing the delivered modules from the moment of delivery to the delivery point to the moment of receipt of order/cargo by the recipient. They are also responsible for intermediate storage of transport module after its delivery to the point of reception and unloading from the transport unit prior to evacuation from the point of delivery to the arsenal (loading on the transport unit) and storage of available for loading cargo modules in the standby mode. The system includes specially equipped stationary objects, which perform temporary storage and delivery of cargo not demanded by the recipient at the place and time confirmed when placing an order for transport and transferred to deferred delivery mode. The described technique may involve at least two types of delivery points - "Goods Delivery Centers" **752,** which consolidate the modules with goods which are not in demand at the time of delivery to the recipient on any territory (regional centers) or "Cargo Post boxes" **751** - certain special places with bracket slots to secure the safe storage of transport modules and their loading and unloading to the units. In the first case "Goods Delivery Centers" **752** may be fully automated or with the presence of the operator. They issue the goods, not demanded by the recipient originally during implementation transport program (for any reason) in a location minimally remote from the point of the initial order delivery. To identify the recipient to whom the cargo is addressed may use the same shipping authorization method as for standard delivery. In the second case, "Cargo Post boxes" represent a special bracket (or section on the wall) equipped with protected slot to safely secure the transport module **751.1** unified with the module fastening system **114** and identical in design to module fixation system on transport unit **(481** on **Fig. 04/21),** optional - providing infrastructure for charging of the transport module **751.2,** and infrastructure for secure access of the units **751.3** and cargo receivers to secure safe storage and protection of module and cargo. To access the contents of the module authorization interfaces **751.4** are used for input information to access, available as possible module equipment **(Fig. 12/21).**

The point of delivery of the goods may also be used as the starting point of load/shipment (with availability of transport module or the module pre-order at a certain point). Each point may have a unique ID and security module as the system element (for identification and use of transport assignments), which may also be integrated as part of the delivery point **(751, 752)** for identifying the place of unloading and loading the modules and place of delivery of the goods to the recipient (including through a secure encrypted remote exchange of identification information with other elements of the system), the coordinates of all the delivery points are stored in the FMS and used for navigation and for creating transport program tasks. Delivery point status (used/free/reserved etc.), is determined by the module after the placement or removal from the point, and reported to the FMS by communication base of the module **723** and service communication system (described in **Fig. 09/21).** FMS also has information about the delivery points' status changes planned on the basis of transport assignments and issuing of goods and slots.

*Service stations* **(740** in **Fig. 07/21)** are the auxiliary subsystem that performs the function of maintenance, inspection and repair of mobile platform elements - transport units **736** and transport modules **726.** The works include scheduled replacement of components and assemblies of units and modules (wheels, batteries, lamps and display devices, etc.), replacement of the waste or of defective structural components (actuators, motors, electronic devices and circuit boards, board wiring, suspension aggregates and design panels, batteries, etc.), cleaning, painting of elements or other protective coating, repair and functionality recovery of defective or malfunctioning units, as well as technical diagnostics of the condition and maintenance of structural components and software. Service stations may be deployed both on the basis of conventional garages and auto services, and be specialized for transport units' service **736** (specialized service networks). Service centers have logistics connections with suppliers of spare parts **(741, 1074)** and components, and they may have equipment **745,** required for the test **742,** qualified repair and pre-/post-repair storage **744** of transport units and transport modules, as well as qualified personnel, the knowledge base **746** and the technical documentation, or automatic lines for the automated repair and maintenance of the system elements **747.** To solve the cases not provided for in the technical documentation, the service centers may organize contact with the support service of the developer and manufacturer of elements **743.** For the repair and maintenance of infrastructure elements, electronic computing power, communication devices and other system components and assemblies the centers use specialized maintenance services and resources, as well as mobile service teams.

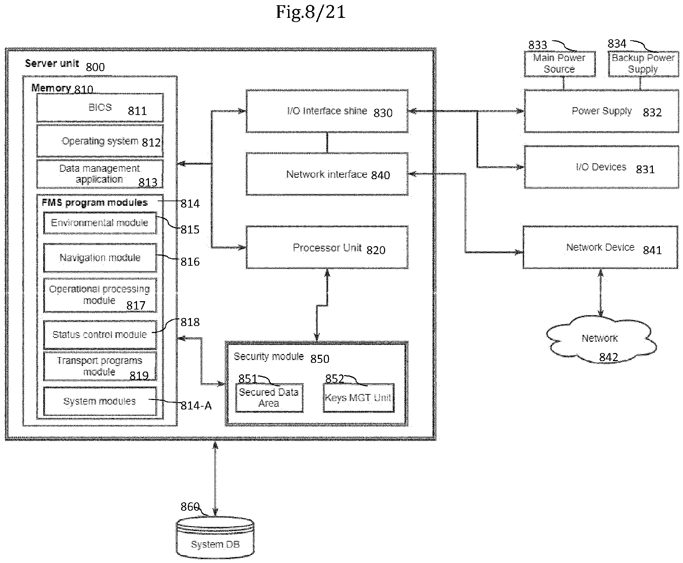

On **Fig.08/21** is an optional example of the implementation of the server system, which may be used accordance with certain example embodiments, for example with FMS **710** or as an element of Arsenals **(725)** or Bases/Depots **(735).** The server system may include one or more server units **800** with similar or different server hardware architecture and configuration, one ore multiple system data bases **860,** which may be a physical data storing devices, network devices, virtual devices or clusters or cloud data sources. Additionally as a part of server system may be used a various peripheral devices like presented on example network device **841,** power supply **832** which may different construction types and may use different principles of work, input/output devices **831,** other various connected systems and devices, which may be used with server system according to specific technology embodiment. Inside server unit various components of unit may be communicatively coupled with each other via some communication bus (not shown on **Fig. 08/21),** connected directly or use other method of communication.

Server unit **800** may include one or more processor units **820,** which may be a single processor unit (CPU, microprocessor, Graphics processing unit - GPU, Digital signals processor - DSP, Front-end processor or processors of other types, functions and construction), or multi-processor unit (like multi-core processor and other types of multi-processor systems and devices). Processor unit may responsible to perform a various operations with data source, which is stored on memory unit **810,** come from various communication exchange channels (from outstanding devices and data sources via network interface **840,** from security module **850,** from other possible data source) or generate in processor unit as a result of other data processing. Processor unit **820** may execute one or more programs or algorithms in the same time to implement various functions of Server unit **800.** Processor unit **820** may also support quantum calculations (q-bit type calculations) in case of quantum computing devices.

Memory **810** may consist a various types of memory units, permanent, volatile or non-volatile (for example various examples of implemented embodiments may include RAM-random access memory units, ROM-read only memory units, various magnetic data storage devices, optical data storage etc.) It may comprise various data sources used for operated different components and modules of server system and other systems and modules. On described example memory unit **810** storing BIOS (binary input/output system) **811** for controlling of basic low-level server unit operations, an operating system **812,** which perform control of main operations of server unit, data management application **813,** which perform control of general interaction of various data sources and the management of data roles and hierarchies, and various FMS program modules **814,** perform and responsible for various FMS functions. On example it is environmental module **815,** responsible for control and management of various environment elements (state and deterioration of units and modules, bases fullness etc.), navigation module **816,** responsible for various navigation data (for example - for location data of various elements of system infrastructure) and dynamic navigation control of units and modules, operational processing module **817,** responsible for main FMS algorithms performance, status control module **818,** performed control on system programs status, transport programs module **819,** generate all program tasks for all dynamic system elements, and system modules **814-A,** may include other system program elements and algorithms. Server memory unit **810** also may optionally contain data relevant for functionality of Artificial Intelligent (AI) or deep machine learning algorithms, which may be a component part of FMS system.

Server unit **800** also may use one or more various data storage or system database **860,** which may be performed as a separate electronic devise, interacting with the server unit **810** directly or through a network interface **840,** as an external database, including cloud base, virtual, distributed or other types of database.

The network interface **840** performs communications of server unit with external computing devices, connected to network **842.** For example, network interface may connect server unit with transport units, transport modules, units bases, arsenals, with customers thru user interface on they computing devices, with other system infrastructure elements, external data source and other server units. The network interface may connect to server unit thru input/output interface **830** (how its sown on **Fg.08),** directly, thru system bus or with other methods.

Input/output interface **830** may be used as an interaction unit to connect server unit **800** with range of external **831** and embedded devices, sensors and interfaces, used in the process of the server unit **800** operations. It may, for example, communicate server unit with data input/output devices (video displays, keyboards, controller kits, microphones, speakers etc.) permitting system operator or agent interact with the system, connect server system with external data drives, connect server unit with sensors, external ports and with a wide range of other electronic devices. Also in/out interface may use for connect server unit with power supply **832.**

Power supply **832** is an energy source necessary to maintain server unit functioning and to ensure its operations and to preserve the data used during its operations. It may be a direct grid connection, connection to voltage transformation and stabilization system, to battery or battery's pack, to uninterruptible power supply device (UPS), to solar photovoltaic (PV) panel, to wind powered generator, to energy reactor of different construction types, to other (many) power sources. Its may be distributed for main power supply **833,** which used as a main power source for server unit **800** functionality, and backup power supply **834,** which may used as a backup system to ensure the continuity of the server unit energy supply in the event of failure of one of the main power sources.

Security module **850** may used in a server unit **800** to encrypt data exchange, to ensure the security and protection of transmitted and received data, to authenticate the signatures of items and program elements that use encryption key exchange, and to securely enter, store and exchange of keys which encrypt the data. On example embodiment Security module contains elements as a protected/secured data area **851** and a key management unit **852** that may be performed as a typical HSM (hardware security module) device or may have other design that provides secure entry, storage and use of encryption keys and interaction with other system elements. For example, the security module **850** may connected to the processor unit **820** to ensure the security and signature of the operations performed by the processor. As well as security module may be connected with the memory module **810** to ensure the encryption of key elements of the system, also to ensure the encryption of the interaction commands between the processor **820** and the memory module **810.** A wide range of possible encryption technologies and keys types may be used in security module: Triple DES, RSA, Blowfish, Twofish, AES - Advanced Encryption Standard, private keys, public keys, symmetric keys, transport keys, master keys, static keys, dynamic keys, other types of keys and cryptography tools or its combination, quantum encryption etc.

*Communication system* **(Fig. 09/21)** is a set of tools used by various elements of the technology to communicate with each other and with external systems and users, as well as communication channels and networks used for this connection. Each of the elements of technology (transport unit, transport module, depot/base, arsenal, FMS) may have its own communications module (single or multi-channel) (**912, 913, 914, 913.1, 914.1, 918, 919**), which may perform communication functions autonomously, but all they are linked into a single information and communication system through a communication network **911,** function of which may be performed by Internet, LAN network, Intranet, mobile and landline networks, and other connection options, existing or future systems not mentioned here, as well as to build a separate communication network based on the communication between the system elements. The communication system may use a variety of channels and protocols for communication - GSM, EDGE, Wi-Fi, Bluetooth, dial-up, NFC, radio channels of different frequencies, optical communication lines, as well as other channels, protocols and frequencies used for public and special communication and not mentioned here, including (but not limited) to ensure the V2V (vehicle to vehicle) **916.1,** V2I (vehicle to infrastructure) **916.2,** V2B (vehicle to Base) **(912),** V2H (vehicle to human) **915** and V2X communication.

Shown in **Fig. 10****/****21** block diagram describes the basic structure and relationship of elements of the automated transport and logistic system, including all the elements mentioned above and described in Fig. **01-09/21,** in their interconnection. In addition, the participants and the transport system elements **(Fig. 10/21)** are: the sender **1040** and the recipient of goods **1050,** each of which may be the customer of service (service subject), as well as delivered goods and service (service objects) **1030.** Customer (who may be either the sender or recipient) or the external service, through which they place an order for transportation, may be registered and integrated with the FMS system. The registration creates user account in the system, which recorded the minimum data necessary to carry out orders (may be different for different types of orders and different territories, may include and not include the personal data of the customer, the data about their location, coordinates and means of communication with them, payment methods and billing information, and other information, if required). Primary registration of the user in the system may be made automatically in the process of placing the first order. To simplify placing an order the Customer may use his/her user ID assigned to the system, or to use other means of identification (e-mail, phone number, account in social networks, etc.). User registration is performed by user themselves through the UI (on the website or through the mobile app), by operator of a call center or by system's agent based on Customer's application form, based on the processing (automated or manually) of questionnaire form filled in by the Customer, or by other means.

### "How does it work"

The described technology can help to solve both transport issues of the automated delivery of goods from one point to another (including parcels, orders, food, correspondence, accessories, luggage and other payload), and issues of informational nature: for automated monitoring of areas and collection of information (scanning the environment, weather, noise, pollution, illumination, scanning the road surface and transport infrastructure, scanning of pedestrians and other objects and traffic subjects for various purposes, scanning and recording offenses and incidents, etc.), as well as for services issues: used for the automated provision of various services (delivery of fuel elements and the elements of the power supply, lighting, garbage collection and recovery, automatic mobile ATMs and mailboxes, automatic assistants, etc.) or job. To perform various specific tasks there may be used modules specifically designed and equipped to perform these specific functions, and specific equipment and devices for transport it at transport units and other platforms. The spectrum of use of this technology is not limited to the embodiments described herein, but includes them.

*Preparatory stage and related technologies -* the use of the described transportation technology is preferable in the area that pre-mapped and pre-outfitted with basic systems infrastructure, for which it is possible to make and lay a route of transportation based on previously captured and continuously added mapping and navigation data. So before to start using the transportation system of the described technology in some areas (in any city or district), this area may be prepared (to ensure availability of the necessary infrastructure, to perform primary cartography and navigation linking of location, create a map of the area, tie basic architectural objects, noise and relief to this map, to register in the system and localized on the map the main customers of transport services, to make integration with existing interactive road infrastructure and urban environment where it is possible, to prepare the space for loading and departure of order, to provide access to them for transport units, to install slots for storage of modules and equip the entrances to them). In other words, initial transportation network may be established. Mapping and navigation linking of area may be accomplished using third-party map services (such as Google Maps, HERE Maps, YANDEX maps etc.), and with the help of existing and emerging mapping technologies: aerial photography, satellite imagery, the use of special navigation equipment - navigation trackers installed on vehicles, trucks, trackers and wearable options, roaming by operator. Linking of objects to the navigation data may be made on the basis of post addresses, GPS (Galileo, GLONASS) coordinated locations or other services (e.g., "whats3words"). The desirability of these tasks carried out for the application of the described technology. It should also be noted that the mapping and scanning may be performed not only for roads and streets, but also for pedestrian zones, bicycle lanes and indoor space inside buildings, in which the transport units are supposed to move with separation of zones, scanning places of zones transition and places of transport units access to different zones/from zone to zone. Later on the primary mapping may be adjusted and corrected with the help of information coming in FMS from the units and modules during their movement and environmental and infrastructure scanning. For some embodiments, use of this technology (e.g., using cargo modules without the involvement of an automated delivery system, with manual modules loading, manual loading of modules on non-automated vehicles and delivery by the operator/driver) detailed initial mapping is not required, but the original equipment of the area serviced by technology with basic infrastructure (slots for attachment of modules, properly outfitted storage and charging sites, sites for maintenance, integration of modules with local communication lines and communication networks, the binding of delivery points and infrastructure to coordinate system) is desirable.

The following examples of the technology use describe particular cases of the use of the entire set of technical equipment offered by the described technology (modules, transport units with different level of automation, FMS, bases and arsenals, slots and technical stations, other possible components of the system) as automated transport, logistics and service system. However, applications of the described technology is not limited to the examples of use, and are meant to make a selective and partial use of elements of the described technology and options for using elements of the described technology in combination with other technologies of transportation, delivery and storage of goods and services.

*The task of transporting a specific cargo from a particular starting point to a specific (or dynamic) end point or on a specific route using a particular transport module* is formed by FMS based on requests from the customer directly via the user interface of the system (for example, via a mobile application), by means of system interfaces through (independent) information system (CRM, ERP or other) or with use of the module itself with the information entered by the customer via the available interface of module (exampled on **Fig.12/21).** Transportation request initial application may contain the following information (as an request framework option):
- Transportation type (according to the list of possible types of transportation);
- Place of departure coordinates (address, GPS coordinates, slot ID, etc.);
- Place of receipt coordinates (address, GPS coordinates, slot ID, etc.);
- Route (if transportation along the route is required);
- Name, ID of the sender;
- Name, contact details, ID of the recipient;
- Category of recipient (according to the list of categories of recipients);
- Dimensions of cargo (weight, height x depth x width) and its characteristics;
- Order for the cargo module of a certain category (according to the list of types of modules);
- Category of cargo (according to the list of types of cargo);
- Shipment readiness time of cargo (by default - right now);
- Expected delivery time (time or interval);
- Timetable for the route (if traffic on the route option is chosen);
- Instructions for cargo transfer process (the transfer mode, the recipient contact information, means of communication and authentication algorithm to the case of no delivery, etc. if required);
- Other required characteristics (in particular - the transportation payment method and mode).

Some fields that are present in the application, in the absence of specific instructions from the customer may be filled by default (e.g. the "Shipment readiness time of cargo" and other fields). The number of "default" fields also may depends on the type of interface, which is obtained through an order (during order entry via the interface of the module the majority of the order fields may be filled "by default"), some of the fields may be filled by automated ordering system (CRM or other).

As shown at **Fig. 10****/****21****,** accepting and confirming the order (there are different options for the authorization and confirmation of the order depending on the customer type and status, including by entering the customer ID, one-time token password, the user's payment data, "confirm" button on UI etc.), FMS system **1060** with usage of main system capacity performs order analysis, builds the initial route (using the built-in mapping service **712 (Fig.7/21),** available data on traffic and the situation on the roads, and optionally using automatic algorithms based on deep machine learning technology **714,** statistical and historical data, for example), defines the basic criteria for order: required number and type of transport units **1010,** distance and power reserve required to fulfill the order, the number and type of transport modules **1020,** method of loading and unloading of transport modules, transportation order execution mode, order priority (depending on customer and order type), transportation weight distribution, other variants of parameters for the formation of the transportation program. When these basic criteria are defined, FMS system based on the existing inventory data from the base stations/depots **(1011)** and telemetry data from transport units **1010** identifies the base station (stations) **1011,** from which the transport units will start, transport units ID **1010,** assigned to the order, arsenal **1021,** in which the transport modules **1020** are stored, that are required to fulfill the order, transport modules ID, base station of the route end where transport units return after order execution, arsenal for storage of transport modules, where they will be returned after the order (or orders) will be completed, the slots to unload the unit in place of loading **1046** (loading destination **1041)** and discharge **1056** (receiving destination **1051)** of cargo **1030** (if it is planned to upload modules on slot), builds a transport units route across all waypoints, connects the route to the initial route of transportation (building the final route), forms the basic criteria execution of the order (the distance, estimated time for the "took the goods"/"handed over the goods" checkpoints, order execution cost, etc.), forms the program of the infrastructure items reservation and transportation program for each of the involved elements, using the communication system **1090,** transmits program to each element involved in the execution of the order (transport units via **913.1 (Fig.09/21),** transport modules via **914.1,** base stations via **913,** arsenals via **914,** elements of the road and internal infrastructure via **916** etc.), if necessary, waiting for the order confirmation criteria from the external system **1080** (e.g. - proof of payment system what payment order was paid) or users, activates the order execution and sends a notice to the customer, to the goods shipper **1040** (and to the order recipient **1050)** of the start of order execution, estimated checkpoints runtime and other critical for customer, sender and recipient data (optional). In case of advance payment requirement for the order fulfillment system reserves the infrastructure needed for order implementation, sending through the external system **1080** (payment system) the request for payment to the customer and waiting for confirmation of payment. In case of non-receipt within the waiting period specified by the system the order and the program are canceled, the booking of infrastructure elements is cancelled by the system as well. Further payment information may be used in billing subsystem for billing purposes. In case on necessary communication with shipper **1040,** recipient **1050** of the cargo or other user FMS **1060** thru support/ help desk sub-service communicate with users via available user interfaces **1042** and **1052** (for example via web-interface **1043,** mobile application **1044** and **1054,** API with internal communication interface **1045,** via SMS **1053,** or via direct call **1055** or other available interface). After modules **1020** and units **1010** arrived to the final arsenals **1021** and bases/depots **1011,** FMS **1060** analyzed environment info from environment control **711** and system data base **716** (on **Fig.7****),** if necessary, perform service order for charging to charging interface **1012** and to take necessary power from the greed **1013,** or to perform available service **1070** (to clean a platform elements on cleaning spots **1071,** to perform in-house service **1072** and ordering necessary spare parts **1074).** In emergency cases, accidents and breakdowns FMS **1060** perform request for emergency service **1073.**

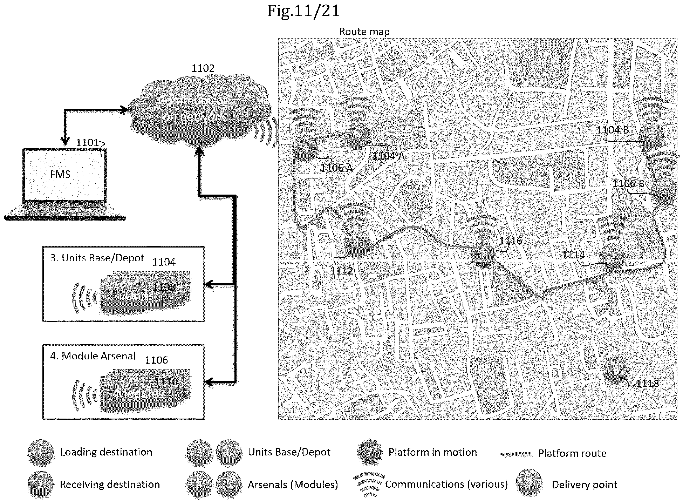

According to the description of delivery method, shown in **Fig. 11****/****21****,** upon receipt and activation of program task the transport unit **1108,** assigned to perform the specific task, is activated, leaving a charging batteries slot (in case of the unit with the electric drive) in stationing depot **1104-A** and starts to move to the first route checkpoint (arsenal **1106-A** to get the transport module **1110,** assigned for the order program), using its own navigation system, set of on-board sensors (if available), performing the program autonomously under control of on-board software algorithms, under the management and control of the operator (which may be an autonomous high-level information system), in the combined mode, in the mode of following in the platoon, or under the control of the driver. In case of delays or obstacles in the implementation of routing tasks (traffic jams, accidents, streets overlap, construction works, etc.) on any of the sections of the route, transport module **1108** may via the communication system **1102** request from the FMS **1101** task for change of route or build an alternative route independently using on-board autonomous computing and navigation tools and map information, reporting the route change to FMS, as well as (optionally) notifying transportation sender and the receiver on changes in the route and estimated execution delivery time and achievement of checkpoints through messages (text, SMS, POPUP, through social networks and services available through the system user interface, other specified by system functionality and the possibilities of the customer and recipient). Upon reaching the arsenal location **1106-A,** transport unit gets access to the zone of issue of transport modules and loads transport module **1110,** attached to the order, to its transport platform via an integrated manipulator, with the help of operator, or (optionally) by the manipulator or module loading system, established in the arsenal. After the installation of the transport modules to a transport unit and its fixation on the transport unit platform using module fixation subsystems, as well as (optional) integration of transport module and transport unit in the single related information and energy system through the integration bus on unit and module interfaces. Every transport unit **1108** and every transport module **1110,** listed in the system, have their own unique ID **(430, Fig. 04/21, 115, Fig. 1/21),** which may be written, among other things in coded form on electronic cryptographic elements (chips) integrated into the unit or module, which is available for the purpose of secure reading the mutual authentication system elements and to prevent unauthorized or abnormal use or access to the system.

After loading the transport module **1110** and the integration of module and unit **1108** integrated system through the communication network **1102** transmits to the FMS **1101** confirmation of the passage of the task checkpoint, leaving arsenal **1106-A** and performs program of movement to the next checkpoint of program tasks - to cargo loading for subsequent transportation location **1112.** Movement of the combined system of module and unit at all stages of the route may be performed (depending on the transport unit and the transport module type and design) in various transport zones (roads, cycle paths, pedestrian areas, indoor spaces, special overpasses), depending on the zone category, unit selects type of transformation, speed mode and surrounding space and objects scan mode. Optionally possible the transmission of module from unit to unit (in case of insufficiency of resources of one unit to deliver module or the inability of certain type of units to perform movement in the delivery zone), the use of balloons, airships, drones and other aircrafts, vessels for transportation, including the combined use of several types of transport platforms with module transfer therebetween. Data from external devices, sensors and cameras may be recorded in on-board unit memory (or module **1110** memory), and also be transferred to the FMS head system **1101** for storage, processing and use. Depending on the loading point **1112** data access mode for complex to loading point is selected. If the initial parameters do not define a special area or place of loading and do not provide access to it, the complex independently determines the place of parking, as close as possible to the point of loading and taking into account the features of the vehicle selected as transport unit (car, aircraft, ship, automated convertible rover etc.) having the ability to access the operator and cargo for loading and seeking to comply with traffic rules and regulations established for the location of objects and vehicles in this area. After arriving and parking the complex (either directly or through FMS) through a communication network **1102** may sends a notification to the customer on arrival and readiness for loading, as well as may reports required details, and transmits the necessary data (module and unit ID, the exact complex coordinates, instructions and data to perform access to module opening/closing and storage system, etc. if necessary). If access system to the premises for loading prepared and maintained, and the vehicle selected to perform the task has option of access in the premises, the complex enters into the premises and comes to a loading point - module loading port or slot (informing the customer about his arrival and readiness for loading). Then there is a cargo loading process in a module (by the operator or automatically). The operator or the automatic system, using the data for access to the module, transmitted by complex or FMS, provide access to a module (opening module), loads the cargo, and then block access to the module (closing the module). Optionally module loaded with goods may already be in the place of loading (combination of arsenal and loading point) or on module placement slot **(1046, Fig. 10/21).** In this case, the customer loads the cargo into the module **1110,** and then transmits the module ID as an identifier of cargo at the order transfer to FMS **1101.** In this case, the system generates a program task in such a way that the transport unit is sent from the base directly into the cargo (module) loading point **1112** or to the slot **(1046, Fig.10/21),** bypassing the arsenal. At the same time, depending on the type and category of cargo, the transport module activates the appropriate program for on-board microclimate in case of module equipped with climate control system **(122, Fig. 01/21)** - cargo space may be insulated, ventilated, heated or cooled, the humidity and other microclimate criteria may also be controlled (depending on the presence and design of the onboard module microclimate system). Optionally, the transport unit may load the module to the storage slot at a loading point **1112** and leave it for subsequent loading (go to base **1104).** In this case, the module will wait for loading cargo by the sender (by giving him access after identification). Then, the transport program is performed similar to the version with pre-loaded module in the place of cargo shipment **1112** (see above). Also, the cargo module after loading the cargo, using a system of built-in sensors and transducers (if module is equipped with it) may transfer after loading into FMS updated information on cargo and order (for example, the real weight of the load, measured integrated weights). These improved data may be used to adjust the parameters of the order (for example, its price).

After loading the goods in the transport module or loading a transport module with the load and blocking access to content of loaded transport module **1110,** the complex reports to FMS **1101** the passage of the next transit point on the route, leave the location of the cargo loading point **1112** and performs movement to the point of goods receipt by the recipient **1114.** If transport unit **1108** resources (stored energy in the battery, fuel tank, etc.) are not enough to reach the point of receipt **1114,** the system may stipulate the module transfer from one transport unit to another, or several such transfers. Such transfers may be carried out both on a route, and at transit bases **1104** (for the safe transfer of the module). At the same time every transport unit **1108,** involved in module transportation, must have enough resources to return to closes to transfer point base/depot **1104** which has a free slot for charging and storage of the unit, and the ID of each element involved in the transportation, is included in FMS program task (which also counts resources of vehicles involved in the execution of the program on the basis of telemetry from the system elements and navigation data). Reaching the estimated point of cargo transfer to the recipient **1114,** the complex determines the place of optimal parking (if it is not provided with access to the territory or premises of the recipient), and informs the FMS system on reaching the control load transfer point or slot, as well as the exact coordinates, and moves in the mode of cargo unloading/module discharge.

The transfer of cargo to the final delivery point may take place both from the machine-to-person (the recipient), and machine-to-machine mode (from the transport unit to the stationary slot/"cargo postbox").

After the arrival of the complex **1116** to the cargo delivery endpoint **1114** and transfer through the communication network **1102** the report on reaching checkpoint FMS **1101** may generates a notification for the customer ("reaching the checkpoint" or similar) and for the recipient (about cargo delivery to the delivery point **1114),** also containing information on coordinates and module ID, message time, waiting time, the way of the receipt authorization (for example - PIN-code to enter or single use mobile token password for automatic exchange of module and mobile electronic device of recipient to automatically access the contents etc.) and sends the data messages through the network **1102** through the channels provided by users communication mode (PUSH-notification, SMS, e-mail, system message through integration interfaces to external systems, operator call etc.). The variant of the use of technology for sending alerts to users involves not the FMS system **1101,** but the transport unit itself **1108,** using the on-board software and computer system **(411/Fig. 04/21)** and the on-board communication station **(420),** sending a message about reaching checkpoints and instructions for authorization and receipt of the goods to the customer, the person who loads the cargo, and the receiver using its own communications system with access to the channels of public communication. In this case, after sending a message to users, complex sends system notification to FMS **(1101)** on the message sent to users. Sending of messages may use a variety of mechanisms to monitor receipt of messages. If the user has not received a standard message at a specified communication channel, activation is performed for algorithms using reserve communication methods or algorithms of action in case of non-receipt of the goods.

The recipient of the goods, taking the message (optionally on mobile communication device) of goods delivery to the final point of delivery **1114** and instructions for obtaining, goes to the complex (or transmit this information to a person authorized by him for receiving the goods, if it is stipulated by system usage conditions), or to the slot to which the module **1110** is unloaded with the cargo. When searching for complex on location it is possible to use the coordinates as well as external alarm devices of the complex, which user may activate to give off short-term signals to identify the location of the complex, using appropriate mobile application interface command on the mobile computing device having a connection with the unit **1108** directly or through FMS **1101.** After the arrival of the recipient directly to the module waiting unloading, the recipient, using the received instructions, initiate algorithm for cargo unloading (which may be entering the PIN-code via a built-in module PIN-pad, the activation of the NFC-tag or by credit card through the built-in reader, biometric and voice identification by readers of biometric data embedded in a set of sensors, cameras and microphones, the utterance of the code phrases, verification by entering a password for Wi-Fi network, distributed by module, on the mobile computing device of the recipient, equipped with Wi-Fi module, a different authentication method with the use of input/output interface options which possible options shown on **Fig. 12/21).** This possible input/output interface equipment may include as an input options: PIN-pads with buttons to enter codes, fingerprint readers, cameras/face/retinal scanners for face and biometric recognition, microphones, DNA-detectors for express DNA-analysis, card readers to read different cards types, include NFC for remote cards/chips reading, touchscreens, IR-scanners for scanning IR parameters, QR/BAR-code readers; for output information: LSD/LED/Retina screens, speakers, responded holograms, LED indicators, oscillators, other possible types of interface. User also may use as an in/out interface his own mobile computerized devise (smartphone, tablet etc.).

Complex may carry out authorization of recipient both in offline mode (between the recipient and complex), and online (between recipient, complex and FMS or a special online sub-system responsible for authorization of the recipient including external one).

After identifying and authorizing the recipient, the complex may performs cargo module discharge procedure with the help of built-in manipulators system **440, Fig.4/21** (releasing module from its locking system on the loading platform), or giving the recipient an opportunity to unload the module. Simultaneously with the release of the transport gripper, access system to the contents of the module is unlocked. From this point on the recipient may open the module and get the contents (the goods). In case of provisional discharge of module **1110** on the slot recipient performs an authorization procedure, using the recipient authorization interface, which is module equipped, whereupon they (upon successful authorization) get access to the load. The recipient who received the module may move it by themselves (with built-in wheels, with the help of auxiliary tools or vehicles, as well as with built-in handles for carrying). Upon unloading the contents of the module, recipient stores a free module are stored on their territory, or transmits to the designated areas/devices/facilities for the storage of free transport modules, which may be located in their territory or near it, or installs the free module in the next available slot for modules **(1056 on Fig.10/21)** (at the same time the module determines the slot ID and communicates it to FMS **1101** for creation of program of module **1110** evacuation to the arsenal **1106).** The ID of free modules is recorded during its transfer and evacuation (which is automatically read from the secure ID device integrated into the module and the slot, with NFC, BAR/QR-code on the surface of module and slot associated with ID, other automatic identification method, or entered by the operator manually), information on the modules transfer is communicated to FMS **1101,** so that the system always knows where the transport modules are, to whom of the recipients and customers they are assigned and when the recipient will return module back. Also the recipient after unloading cargo from the module may order evacuation of transport module by transport unit, in this case the procedure is activated similar to the transportation order, the transport unit arrives to module at a particular programmed time and place, module is removed from custody of the recipient after placement to the transport unit platform and its integration into complex with the unit. The freed modules **1110** are distributed between the arsenals **1106** and, upon delivery to the arsenal, control and cleaning, they arrive for subsequent use.

There is a variant of unloading the transport module **1110** contents without unloading it from the transport unit **1108.** To do this, the corresponding transport option must be activated during the formation of the transportation order in the FMS. In this case, after delivery of the complex to the point of delivery identification and authorization by the recipient the system is activated for access to the goods in the transport module (module remains fixed on the platform and integrated with the unit), access system disables cargo lock access interface, user gets access to the contents of module and independently unloads it. After unloading the contents (the goods), user activates the complete procedure of delivery or procedure activate automatically; the system closes the module, blocking access to it and activates complex return algorithm to the arsenal **1106** (for module) and to the base **1104** (for transport unit).

There is a variant of unloading of transport modules from machine to machine (device) with the subsequent issue of the module or its contents for the recipient. In this case, when placing an order, the instructions for obtaining the goods may additionally contain information about the type of device for transmitting of module/cargo, ID of the device, information on coordinates and access to the device, information about the process of unloading the module/content, other information necessary for the unloading. Upon arrival of the complex **1116** to the place of unloading complex sets remote communication with the system receiving module/cargo on the receiving device (NFC, other variants of the communication protocol, visual identification, etc.), determines its ID, comparing it with the one contained in the transportation program, and is set to position required for unloading. Then the procedure of module **1110** discharge is performed from the unit platform **1108** and transfer of it from transport unit to the received device (e.g., stationary slot for modules storage **1056** in figure **Fig.10/21)** without unlocking system of access to content. Once the module installed on the discharge and storage device, storage and subsequent issue of module/contents to the recipient is provided on the module storage device. The transport unit **1108** after completion of the module/cargo transfer procedure to the unloading and storage device and after fixation of module/cargo on the device receives acknowledgment from the module **1110** on integration with the storage device, activates the program for return to depot **1104** and returns to the base. In this case, cargo delivery to the recipient takes place independently and permanently with module installed on the unloading and storage device, (for example - on the slot for the modules).

If the authorization of the recipient in the complex unlading mode without issuing modules and unlocking access to content there is no discharge, or some cargo remains in the module (or the user loads their own cargo) - the system generates (after expiration of the monitoring time/deadline) a notice to the user to obtain the cargo and blocks access to the module. Repeated access to module is possible by the user's authorization. If at the end of the monitoring time the user does not unload module's contents (or does not unload the module), the system may activate the goods transfer process to the point of cargo delivery **1118** (or cargo return), all participants of the transport communication are sent a notice (the content and method of transmission may be different for each participant).

In case of failure of cargo receipt by the recipient at the point of order delivery, the lack at the point of delivery slots available for discharging modules and excess of the allowable waiting limit of the order receiving complex the cargo delivery program to an intermediate center of delivery is activated, FMS **1101** calculates a new program for the complex **1116,** sends the program to complex to execute, and sends to the sender and recipient via a communication network **1102** a notification with information on sending the order to the intermediate center for storage and delivery of goods **(752** on **Fig. 07/21, 1118)** and the instructions on the time/storage mode and procedure of issuing the module/cargo in the storage center. Next the complex **1116** independently moves from the point of goods delivery to the cargo storage/delivery center, specified by FMS. Implementation of the system may involves a variant in which a complex upon reaching deadline independently generates the program for the cargo delivery to the nearest delivery and storage center **(752/1118),** sending system messages and notifications to the recipient and the customer/sender. In this case complex needs to get the confirmation from orders delivery and storage center **1118** or from FMS **1101** to this program. Then, upon reaching order center, the procedure is implemented similar to discharge of module and transferring it to operator or automated storage system (without unlocking content access system). The module is sent for storage to the orders issue center **1118.** Recipient, upon arriving to the orders issue center, passes the authorization procedure, after which they are given the module or its contents. Unclaimed goods/modules after set time are returned to the sender (or other procedures are carried out in respect of their contents provided for cargo delivery mode).

If abnormal situations occur at some stage of the process associated with the interaction of fully autonomous version of the complex and people, the complex may remotely connect an operator. In this case, the higher-level system or the operator by means of system communications **1102** and build-in camera, sensors, detectors and alarm devices **(Fig.12/2)** can connect to the process of human and inventory interaction in order to assist in the communication, to instruct the person, specify the problem or fix the error. Also, the system or, if necessary, the operator may use the complex to organize the customer and recipient communication with the other sides of transportation process. The operator or a higher-level system may also discretely monitor the process in any of its parts, as well as remotely stop, managed or correct work of the complex **1116,** if necessary.

After discharging the module **1110** and getting from the system the confirmation of its delivery the unit **1108** activates program for the return to depot/to the base **1104.** At the same time the base where unit returns may have a different location compared to the one from which unit departed. Upon arrival at the base unit is installed in storage place/slot, if necessary, connected to the charge interface/greed to ensure the charging/refueling, and also transmits telemetry information on the status of its components, the mileage, the level of battery charge and other to the base and the FMS system. If necessary, the unit is sent for maintenance, service or spare parts replacement. If the delivery procedure was used without discharging the module, then before being sent to the final storage base/to slot the unit delivers the empty module to the arsenal **1106-B,** where it is discharged from the unit (similar to above), after which unit is sent to the end base for storage and refueling / charging **(1104-B).**

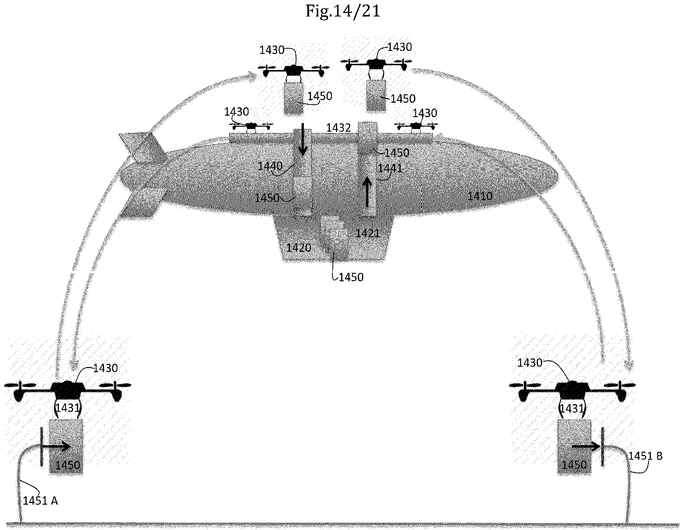

Variant of described technology with pre-loaded modules involves the option of collection and delivery of modules with goods from the customer to the recipient not by individual unit in autonomous mode, but by the truck, capable of carrying a large number (two or more) of modules at the same time, in combination (optional) with independent unit, responsible for the loading and unloading of modules on the truck, as well as the delivery of the modules from the truck to the users and storage slots and in the opposite direction. Figure **Fig. 13****/****21** displays the abovementioned variant of implementation of the proposed technology **1300.** On the base of the truck **1310** (which may be both autonomous, and human-driven, or may move in combined mode) there is a cargo compartment **1320,** including slots for cargo modules and the modules themselves **1350,** device for sorting and issue of the modules **1321,** port for receiving and dispensing the modules **1340.** Additionally the complex includes the platform **1360** (which may be implemented as an external module or the element cargo compartment embedded in the body of the truck), which can hold standalone unit - rover **1330** with manipulator arm or without it. When processing orders for transportation of modules loaded with a cargo, FMS system may build a circular route for such a cargo system, including truck, providing for cyclical movement along the route of several (multiple) points of loading and unloading the modules (at least one). In case of the formation of such a program and transfer it to automated system or to a truck driver (in the form of routing task) complex consisting of a truck **1310** and the unit **1330,** which is located on the platform **1360,** or arrived to the each point independently, moves along the charted route from places of loading to the places of unloading. With the arrival of the complex to the loading site the truck **1310** is parked closest to the module loading location coordinates, moves down the platform **1360,** the rover unit **1330** leaves it (in case of unit pre-loading option), independently on the basis of the individual program moves to the module **1350,** loads it on its integrated surface or platform, and then returns to the truck platform **1360** and takes the position for loading the module in the truck. Platform **1360** lifts the unit with the module to the cargo reception port **1340,** after which the unit may use the manipulator sub-system to perform the loading of module to the module storage and sorting system **1321,** located in the cargo compartment **1320.** Then unit may leave the truck or stay on platform till the next operational task. After that, the truck moves to the order delivery site, wherein it parks as close as possible to the delivery point coordinate, module sorting sub-system **1321** performs the delivery of the module, associated with the cargo at the point of delivery, to the port of delivery of the goods, where the module is transferred to the unit **1330** platform, after which the cargo platform **1360** drops the unit and it transfers the module with cargo to the delivery point where it transfers it (or cargo, depending on the delivery program) to the recipient, or loads the module to storage slot. After this the unit returns to the platform (or move independently) **1360** and the truck **1300** continues the movement along the route. Described embodiment similar to truck option, but with individual drone units moving through the air and cargo mother airship, moving along cyclic route and carrying cargo modules in cargo compartment (as well as recharging the drones for delivery) is shown in **Fig.14****/****21****.** Cargo transport airship **1410** moves in cyclical or circular route over the ground at the height prescribed for the movement of aircraft of this type over settlements, managed autonomously, by the operator or pilot. The airship may be equipped with transport compartment **1420** with the established system of module sorting and storage. Also, the airship may have automated ports for loading **(1440)** and discharge **(1441)** of modules. Also the airship may have port platform **(1432)** for landing the copter drones equipped for recharging their batteries (in case of electric copters) or refueling them. Transport copter drones have capture manipulator to perform a secure grip and transportation of transport modules in the air. Copter drones may move both in autonomous mode and in operator control mode. Also, besides the screws drones may have capacity(s) filled with lighter than air gas mixture to generate lift, energy saving and improving reliability in flight. Upon the airship reaching area under which there is a storage slot **1451-A** with installed module with cargo the copter drone **1430** starts from the platform **1432,** moves to the slot **1451-A,** uses the manipulator **1431** to grab the module **1450** (at this, upon being grabbed by manipulator module frees the lock for fixation with slot), and transports the module **1450** to the module loading port on the airship **1440.** Upon reaching port **1440,** drone unloads the module **1450** to the port receiving system, after which it enters the module storage and sorting sub-system **1421** on board of the airship **1410.** Drone at the same time may land to the platform **1432** for charging or it can be used for other transport tasks. When the airship, moving along the route, reaches the slot location area in the place of module discharge **1450,** the module through the sorting and storage system **1421** and the discharge port **1441** arrives for the discharge and capture by copter drone **1430,** which upon capturing the module moves it and installs on the discharge point **1451-B,** and then returns to the airship for recharging.

The described technology also suggests the possibility of automated loading and unloading of the module to the unit in the luggage compartment of the car (including the autonomous self-driving on), provided the vehicle and the luggage compartment equipment with information and technical systems for integration and interoperability with technology and its elements. In this case, the transport module may be used for transporting goods and commodities in the cargo compartment, and as a backup or additional source/power battery for an electric vehicle (subject to implemented integration of battery module and a vehicle power system).

In case when the task selected is the *mode of movement along the route (territory patrol mode, scan mode, etc*.), transport module for the task should have specific equipment and design (contain a set of necessary equipment, interfaces, and external and internal sensors). System task to perform patrols may contain the following information:
- Patrol type (according to list);
- Coordinates of the route start (address, GPS coordinates, etc.);
- Coordinates of the end of the route place (address, GPS coordinates, etc.);
- Patrol route (map, route checkpoints and their sequence);
- Name, ID of the customer;
- Patrol start time;
- Schedule and mode of movement along the route;
- Type/code of transport module (according to the list);
- Guidelines for unit procedures for interaction with module systems (independent mode of movement along the route/associated driving mode along the route/slave mode of movement along the route);
- Instructions for using the unit and module sensors in the process of patrolling and mode of transmission of information from the sensors to FMS (or to the external information system);
- Other relevant information (if necessary).

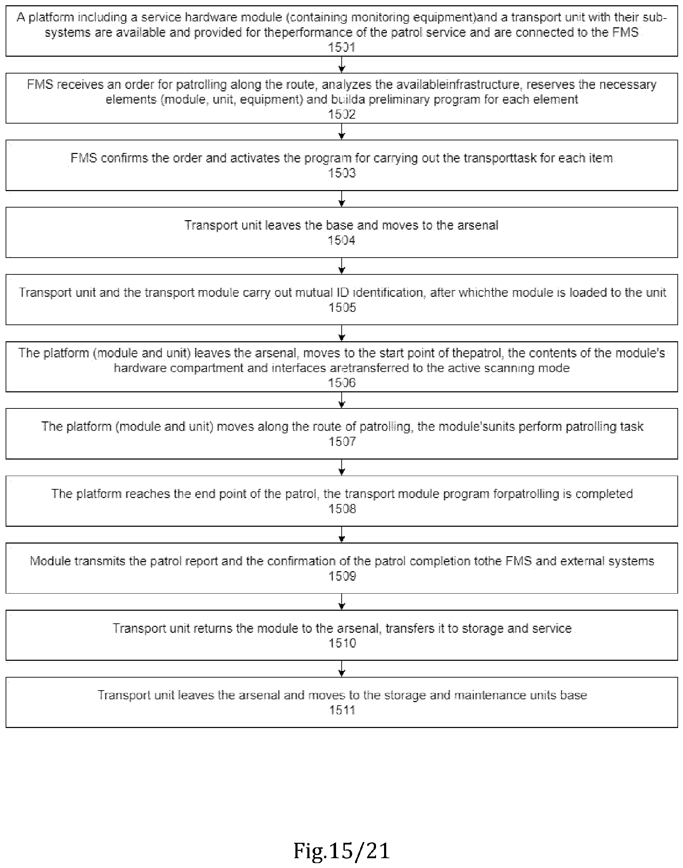

**Fig.15****/****21** is a diagram for performing transport tasks using systems and platforms that are included in the considered technology, associated with movement on a certain route (patrolling a certain area). Upon accepting and confirming the order on patrol (select different options for the authorization and confirmation of the order, depending on the customer's category and the status), the FMS system performs order analysis, builds the initial route (using the built-in mapping service and available data on traffic and traffic conditions, **1064, 1065 on Fig.10/21)** on the basis of route from the order, defines the basic criteria for the order: the required number of transport units, distance and power reserve required to fulfill the order, the number and type of transport modules, the method of loading and unloading of transport modules, order execution mode, order priority (depending on the customer and order type). When these basic criteria are defined by the system, the system based on available inventory data from the base stations/depots and telemetry data from transport units determines the base station (stations) **1501,** from which the transport units will start, ID of transport units assigned to the order, the arsenal, which stored transport modules that are necessary to fulfill the order, ID of the transport modules, base station for route end where transport units will return after the execution of the order, arsenal for storage of transport modules, where they will be returned after the order is fulfilled, builds the route for movement of transport units between these points, links this route to the initial route of transportation (build the final route), forms the basic criteria of the order (distance, estimated time for the checkpoints, value of the order execution, differing depending on the order category and customer), generates a program for execution of transport order for each of the involved elements **(1502),** using the communication system transmits the program to each element participating in the execution of the order (transport units, transport modules, base stations, arsenals, elements of the environment and internal infrastructure) **1503,** activates the execution of the order and sends a notification to the customer of the beginning of the order, expected execution or performance time of checkpoints and other critical customer data (optional).

Upon receipt and activation of program task the transport unit specified for the job is activated, leaving the base/depot where it is based and starts to move to the first checkpoint of the route **1504** (to the arsenal for the transport module assigned to the task), using its own navigation system, complex board sensors, autonomously executing a program under the control of the onboard software algorithms, under management and control of the operator (which may be an autonomous top-level information system), in the combined mode, and follow mode in the platoon and under the control of the driver. In the event of delays and obstacles in the implementation of route task (traffic jams, accidents, streets overlap, road works, etc.) on any of the sections of the task route, the transport unit may via the communications system request from the FMS the rerouting task or build an alternative route independently using on-board autonomous computing and navigation tools and map information, notifying a route change to FMS, as well as (optionally) notifying the customer on changing the route and the estimated execution time of the achievement of the checkpoints by means of messages (text, SMS, POPUP, other specified by functionality of systems and possibilities of the customer and the recipient). However, the main patrol route (the order route) may not be changed by the transport unit alone without customer confirmation. Reaching arsenal location, autonomous transport unit gains access to the dispensing transport module zone and loads a transport module assigned to the task to its transport platform via a built in manipulator, with help of operator or (optionally) via the manipulator or module loading system installed in the arsenal **1505.** After the installation of the transport module to an integration platform or surface it is fixed on the transport unit using module fixation sub-system, and integration of transport module and transport unit into a single connected information and energy complex through integration bus **(482)** of unit and module interface **(112).** Mutual identification of unit and module by ID and comparing the read ID with the transport task data is allowed.

After loading the transport modules and module and unit integration the combined complex sends confirmation to FMS of the passage of the checkpoint of the task, leaves the arsenal and executes the program of move to next checkpoint of programmed task - the start point of the patrol route. The movement of the combined system at all stages of the route may be done in different transport areas (roads, cycle paths, pedestrian areas, indoor spaces and rooms, special overpasses), depending on the category of the area in which is located the system, the rover unit (in the case of its use as a transport unit) selects the type of transformation, speed mode and environment scan mode in **Fig. 05/21.** Data from external sensors and control devices, sensors and cameras may be recorded in an onboard memory of unit or module, and transmitted to the host system (FMS) for storage, processing and use. After arriving at the starting point of patrol complex sends the system message to FMS about passing a checkpoint, or FMS transmits to the module the information on reaching the checkpoint of the route to activate patrol instruments, as well as (optionally) notifies the customer of the start of the patrol **1506.** Later on the movement of complex along the patrol route is performed depending on the selected patrol mode **1507** - if the independent patrol mode is selected, the unit carries out the movement along the route, regardless of the actions and procedures performed by the module equipment. If the combined mode is selected - the movement along the route is controlled by combination of navigation and control systems of unit and smart module system, if the dependent mode is selected - movement of unit is controlled by the module and its electronic systems. In dependent and combined mode operator or system that controls patrols may take control of the complex, interrupt, change modes, as well as program the movement on the route, change the route, remotely control the complex movement.

After completing patrol route, the complex reports to FMS on passing the checkpoint, on the time of its passage, and other telemetry data **1508,** required to evaluating results of patrol. The module used for patrolling may transmit data on patrol separately to special (independent) system of patrols monitoring and control **1509** (or via the build-in FMS sub-system).

After completion of the patrol program the unit may receive from FMS a program task for the transfer of module with patrol complex to the arsenal and for return of unit to the base. Upon accepting and activating the program, the unit moves to the arsenal determined for the module storage, where it discharged the module **1510,** and then leaves the arsenal, moving to the final base and enters the port for unit storage and charge of its internal batteries (in case of the unit with electric drive) **1511.** Optional may be a variant when at the end of the patrolling program the complex independently recognize the nearest arsenal and base for the storage of module and unit, communicates with arsenal and base for reserved slots, build the optimal route to the storage bases and transmits to FMS final system message with parameters of the routes to the storage base.

In case the described technology may used for delivery and providing the service, the design of module service container shall ensure the service providing by the module. System task for rendering the service in this case may contain the following information:
- Transportation/service type (according to list);
- The coordinates of the services delivery place (address, GPS coordinates, route, slot ID, etc.);
- Name, ID of the customer;
- Name, contact information, ID of the recipient and the channel(s) of communication with the recipient;
- Estimated time of receiving the service;
- Parameters and scope of ordered services;
- Type/ characteristics of the transport module/service type (according to the list);
- Instructions on the procedure of interaction with the module system (interaction ports, communication protocols, size and type of physical and commutation interface, services recipient authorization mode, identification mode for the start and end of the service, etc.).

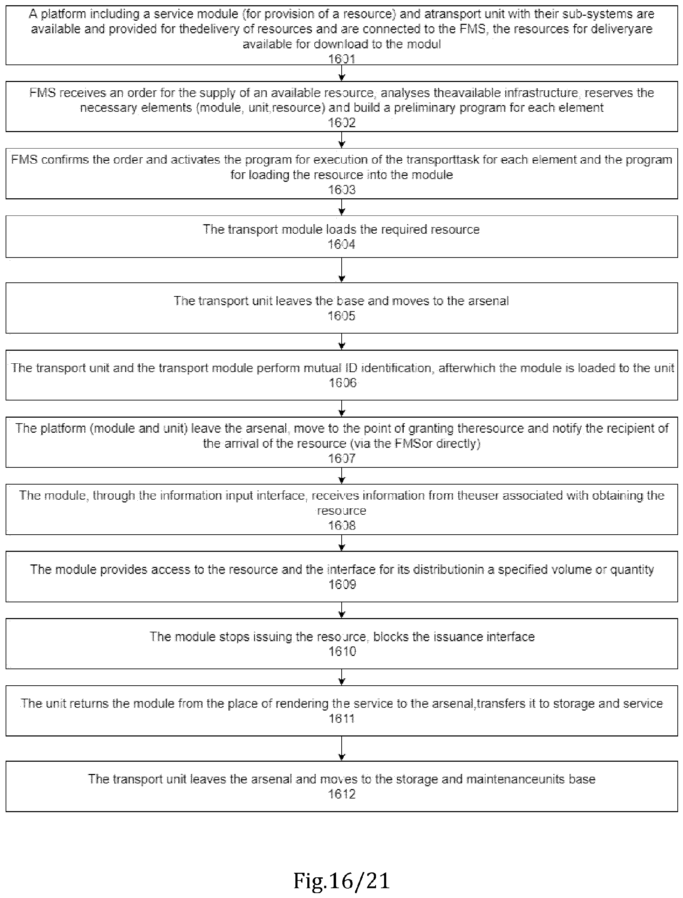

**Fig. 16****/****21** is a diagram of the proposed technology elements implementing service tasks of the mobile providing of resources. Upon accepting and confirming the order for the service provision, the FMS system produces order analysis, defines the basic criteria for the order: coordinates of order delivery, coordinates of the bases and arsenals containing units and modules that are necessary to fulfill the order, the required number of transport units, distance and power or fuel reserve, necessary to fulfill the order, number, type of transport modules and their characteristics **1601** (charge capacity and ports in case of mobile batteries, volume/capacity and tank type in case of delivery of liquids, communication station parameters in case of mobile communication center ordered, characteristics of the speaker in case of order of mobile speaker and so forth), the method of loading and unloading of transport modules, order performance mode, order priority (depending on the customer order and type). Once these basic criteria are defined, the FMS system determines the base station(s), from which the transport units will start, ID of transport units assigned to the order, the arsenal that stores transport modules that are necessary to fulfill the order, ID of transport modules, the desired composition of the contents of the module, the base station on the end of the route, where the transport units will return after the execution of the order, the arsenal for storage of transport modules, where they will be returned after the order execution, builds the route for movement of transport units between these points, forms the basic criteria of the order (distance, estimated time for the checkpoints, the value of the order, etc.), forms the program for execution of transport order for each of the involved elements **1602,** using the communication system transmits the program to every element participating in the execution of the order (transport units, transport modules, base stations/depots, arsenals, elements of road and internal infrastructure) and activates the execution of the order **1603.**

After receiving order from FMS the arsenal, which stores a transport module assigned for fulfillment of the order and arsenal modules loading system **(1022, Fig.10/21),** performs charging/refueling of assigned transport module with necessary ingredients and contents as well as the setting of onboard equipment, interfaces, and adapters for the execution of the order (the action is performed autonomously or with the help of the operator). After the module and its contents are within the set parameters for the job, information system of arsenal sends FMS a confirmation of module readiness to perform service functions **1604.**

After receiving confirmation of module readiness (or during its preparation) FMS performs the activation of the transport unit program at the depot, selected to fulfill the order and sends a notification to the customer of the beginning of the order, estimated runtime of checkpoints and other data critical for the customer and recipient (optional). Upon receipt and activation of program task transport unit specified for the job is activated, leaving the port for charging the battery at the home base and starts to move to the first checkpoint of the route (the arsenal for the transport module assigned for the task) **1605.** Upon reaching arsenal location, the transport unit gains access to the transport module dispensing zone and loads a transport module attached to the order to its integration platform/surface via a built-in manipulator, with the operator assistance or (optionally) via the manipulator or module loading system installed in the arsenal **1606.** Identification of units and modules, forming the order complex, is performed on the basis of their ID, recorded on readable protected elements (chips or another possible devices and tools) by means of encryption and the ID data, contained in FMS program task. After the installation of the transport module to the integration surface or platform **480 (Fig. 04/21)** it is fixed to the transport unit platform **400** with the module fixation sub-system **481,** and the transport module and transport unit may integrated in the single combined information and energy complex through the integration bus **482** of the unit and the respective interfaces of the module **(112, Fig.01/21).**

After loading the transport module and integration of module and unit the combined complex sends to FMS a confirmation of the passage of the task checkpoint, leaves arsenal and executes the program of move to the next checkpoint of program task - to the place of rendering services/services' recipient location **1607.** The movement of the combined system (complex) at all stages of the route may be performed in different transport zones (roads, cycle paths, pedestrian areas, indoor spaces and rooms, special overpasses), depending on the category of the zone in which the system is located and the unit design, unit chosen type of transformation, speed mode and environment scanning mode. Data from the onboard sensors and control devices, sensors and cameras may be recorded in an onboard memory of unit or module, and transmitted to the host system (FMS) for storing, processing and use. After arriving at the point of service rendering the complex transmits a system message to FMS about passing the checkpoint, the unit transmits to module directly or thru FMS an information on reaching the checkpoint for the activation of tools providing the service, as well as (optionally) notifies the customer of the service delivery to the point of service rendering. Service rendering point may have fixed position, but it also may have dynamic position (for example, it may be linked to the coordinates of the mobile communication device associated with the recipient of the service or to the determined moving object like a car). In the second case complex searches for the customer and determines the service delivery location on the basis of the dynamic data of the location (for example) of associated mobile device, transmitted by it via the communication network and information systems to the FMS or directly to the complex.

After completing the delivery of module to perform service functions, the complex notifies the recipient of the arrival of service module to the point of the order execution, and transmits the exact coordinates of the unit and module and landmarks on the terrain/map (via communication methods specified in the order) and instructions for the recipient authorization procedure **1607.**

Once the service recipient detects and identifies the complex, the recipient passes the authorization procedure (following the instructions) - either by inputting control data or by reading biometric data, or by using electronic keys for authentication (including remotely automatically readable), or using another (or combined) methods **1608.**

After the recipient authorization procedure and confirmation of their identity the system activates algorithm for providing the service, as well as (optionally) the unloading of the transport module **1609.** The transport unit after discharge of the module is sent for final storage base. Transport service module remains at the disposal of the service recipient until the end of the rendering of the service function, or until the exhaustion of the resources necessary to perform the service function. A control sub-system for monitoring the quantity or volume of the issued resource may control the quantity or volume of the resource for issuance specified in the module program. After the quantity or volume of the resource given is reached in the program task, the control sub-system stops issuing the resource. After the exhaustion of the resource, or the end of the performance of the service the module through its communication system transmits to FMS information about readiness to be transported back and about its location. FMS forms the order to the next transport unit to load module at its location and to return the module to the arsenal, which the unit performs. There is a version of the service function without unloading module; in this case, the entire complex is located in the place of the provision of services till the end of its rendering or until the exhaustion of the resource in the module, after which the transport unit returns the modules to the arsenal for recharge and subsequent use.

Upon completion of the service function **1610** or the exhaustion of the resource the module transmits the relevant system information to the FMS, which generates and transmits the command for the unit to evacuate the module to arsenal **1611** for recharge and subsequent use, and the subsequent return of the unit to the base for storing and charging **1612.**

There is a version of the serial (continuous) rendering of service with consistent replacement of transport modules/complexes with expended resources with new ones. The variant of using modules and transport units for providing the service may be order to ensure the supply of the object by some resource for a certain time (for example, providing electricity for street campaign or event). In this case, several (at least two) units with modules connected to each other **(1116** at **Fig.11/21)** are delivered to the place of the event **1114.** Power supply of the object is connected to one of the modules, which acts as the energy hub. Power supply is activated at preset time. As the dependent modules charge is depleted, they are replaced with charged ones. This ensures continuity of power supply of the object. At the end of the event (the time of completing the order for power supply) all the modules are returned by units to the arsenals for charging and later use.

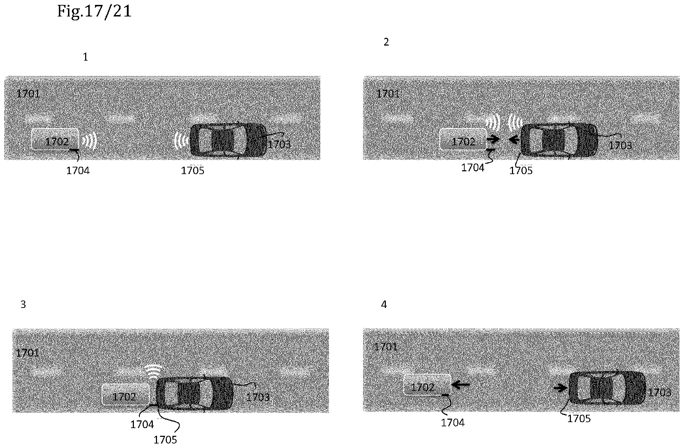

**Fig.17****/****21** offers the option of providing similar services to provide power or charge, but in motion, where the complex may be used to charge electric vehicles or refueling vehicles on the go. When ordering this service, the vehicle to be filled **1703** may be equipped with their own autonomous management system, identification systems, V2V-interface that is compatible with unit systems, navigation and positioning systems, communication with the FMS and the port for receiving energy or fuel on the move. When receiving an order for refueling or charging on the move, which may be formed by on-board electronic system of the vehicle (including autonomous), the FMS determines (based on the data transmitted by the vehicle) the vehicle route, the power reserve and the need for energy (or fuel) as well as speed limit, which must be maintained during charging. Based on these data, and data from bases (which are located along the route of movement and which may host, among other, the on-duty complexes **1702,** consisting of units and modules with batteries of high capacity and automatic buses for charging **1704** in case of charging electric vehicle) FMS creates the program for order fulfillment, determines base, unit and module for order fulfillment, creates the program for order fulfillment, including the route of movement and information necessary for identification of the customer's vehicle and gateway for charge. After program activation the complex **1702,** allocated for fulfillment of order, starts from the base, and begins to move along the route with the speed necessary to get closer to the target vehicle. The complex and the vehicle in motion transmit to the FMS or to each other navigation information about their location and get information on the location of target/module. Entering close proximity **(P.17-1/21),** the complex **1702** and the target vehicle **1703** establish information V2V contact through their information networks. Later on the target vehicle and complex act as a unified information system. It is necessary that the vehicle at this point of the order fulfillment have been transferred to the autopilot (and was equipped with an autopilot system) or to the mode of active automatic following in the platoon, in which the vehicle plays leading role for the complex. If it will continue to be controlled by the driver, the driver shall be warned about the synchronization of vehicle and complex driving processes, on non-appropriateness of abrupt changes of speed limits or driving direction and on possible delay in the reaction of systems and components of vehicle and unit. The vehicle, which is in active mode, may transfer all telemetry parameters on the operation of its systems (control system, acceleration and braking systems, etc.) to the unit in the V2V communication mode **(Fig. 17-2/21).** After convergence and establishing contact vehicle and complex begin to move as a single unit, with the regime and the characteristics of the movement being specified by vehicle systems. Complex **1702** takes the position as close as possible behind/in front of the vehicle and exactly follows its movements, keeping the distance necessary to transmit the charging bus **1704.** The system of the vehicle and complex moves as a single platoon controlled by the vehicle. After establishing a stable connection between the vehicle and the complex the vehicle releases the charging port **1705,** located on the side of the complex, and the complex extends controlled flexible charging bus. Charging port **1705** is outfitted with a target sensor and the bus **1704** is outfitted with sensor to locate and connect to targets and mechanisms for the orientation of the transition connector. Finding a charging port **1705,** bus sensors allow it to make the insertion of the connector into a port. After receiving confirmation of contact the command system of the module activates the vehicle battery charging process **(Fig. 7-3/21).** Wireless short distance electric vehicle charging system (https://www.pluglesspower.com as illustration), installed on complex may be used as an option. If a maneuver is needed (deceleration or acceleration, lane change, turn) the vehicle manages the complex motion, transmitting commands (through remote information channel or/and through an integrated bus for power supply) through V2V interface. After the charging cycle end the complex disconnects the bus and the port **(Fig. 17-4/21),** confirm with vehicle the end of connected mode and starts the independent movement on the road. After this (under control of FMS) program is activated for the complex return to the base and its further use. This same service for the vehicle charging may be executed by complex not in motion, but in the parking lot when the vehicle is stationary. In addition, the module with high capacity battery and interfaces to integrate with on-board electric network of vehicle that is installed in the luggage or service compartment of electric vehicle and fixed there with the help of a regular module locking device **114 (Fig. 01/21),** may act as a highly mobile reserve element for electric power, which may be quickly installed or replaced when the resource of the main onboard battery is exhausted, including through the delivery and replacement of such a module on call by transport platform to the place of location of the electric vehicle, including preventive call or automated ordering.

Technology similar to that described for the subordination to the control system of the vehicle, and complex may be used when driving in platoon of several units controlled by head unit or leader vehicle. This mode may use both sequential chain of subordination of units in platoon, in which each of the complexes in the chain following the head control module is the link that transmits control commands to the following complex, and parallel subordination scheme in which all the dependent units are connected to the head leader unit and managed by them, or combined one (when each dependent unit associated with leader unit, but interacting with its neighbors in the chain). When in sequential or combined model of connection the intermediate complex during the platoon movement implements its program and leaves the platoon, this is preceded by procedure of switch of the complex, following it to be managed the complex right before it.

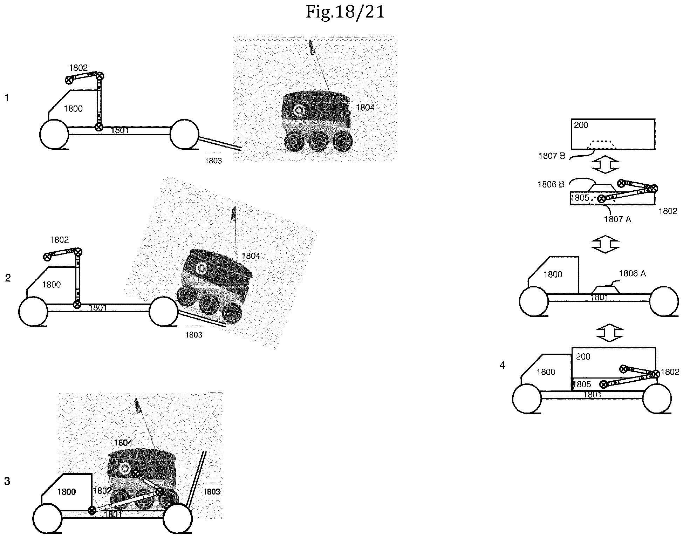

The transport system (units) may also be a platform for transportation of other mobile robots or mechanisms (for example, transport robot STARSHIP: https://www.starship.xyz, Domino's DRU: https://www.dominos.com.au/inside-dominos/technology/dru and other similar devices), the variant is shown in **Fig. 18****/****21****.** In this case the transport unit is a platform **1800** with fixation system **1801** and manipulator **1802** that performs functions of loading/unloading and fixing of device on the platform, fitting the dimensions and design of transported mechanism, and (optionally) a ramp for arrival and departure of the transported device **1804.** In addition to the devices that move on the ground, transport unit and transport module can carry one or more of the aircraft devices (including remotely controlled or autonomous). The order for the transportation of device may be similar to the order for delivery of the goods. In this case the loaded mechanism **1804** may independently arrives to the point of loading **(Fig. 18-1/21).** An important condition is the implementation of option of mutual authentication of unit and the loaded mechanism. Next, passing mutual authentication procedure, the unit performs loading and locking of mechanism on the platform using its manipulators or loading devices of platform **1803 (Fig. 18-2/21).** This is followed by delivery of mechanism to the point of delivery and its subsequent automatic discharge **(Fig. 18-3/21).** After this the mechanism **(1804)** may continue the independent movement, the unit with platform may return to base.

Optionally integration platform **480** may act as an independent transporting device **(1805),** intermediate between transport unit **1800** and transport module 200. In this example of technology embodiment integration platform **1805** may be equipped by different manipulators, devices and mechanisms, operated autonomously independent from transport unit **1800** systems or in collaboration with these systems, to perform various specific functions depending on specific transportation and service tack. It may be a manipulators for manipulations and loading procedures with transport modules, set of manipulators and artificial legs (or wheels) for self-transportation of platform with and without the module in specific area and environment, electric drives, electronic computing devices for perform management of equipment and devices, installed on platform, sensors, batteries and other energy sources for autonomous power supply of equipment installed on platform. Also this type of transportation platform may have two systems for fixation - one equal to fixation/blocking sub-system **114** of module to fix the platform with unit body and their fixation sub-system **481,** and another for module fixation sub-system **481** to fixate the module on transportation platform. The set of devices with which transportation platform **1805** may be equipped differs depending on specific transport task, performed by complex. Depending on this task transport unit may be equipped by removable integration platform at first, and then loaded the module on platform. After unit **1800** deliver module **200** to delivery destination, integration platform may perform manipulations with module (unload it with embedded manipulators for example) and stay on unit (return with unit to the depot), or disconnect from unit **1800** together with module **200** and perform further movement separately as a independent transport platform (for example, to overcome staircases if platform **1805** is equipped with a device for self-movement and transport through the stairs). This intermediate transportation platform **1805** may also be equipped by locking system **1807 A** (to connect platform with transport unit via integration hook **1806 A** installed on unit) and integration hook **1806 B** (to connect with module looking system **1807 B).** This devices **(1806 B and 1807 A)** may have different construction and size so integration platform **1805** may act as adapter to integrate module with different transport platforms, holders, slots and constructive elements of various transportation systems.

Information about the state of the environment and the objects scanned by sensors of unit and module in the process of performing of transport tasks may be send for processing to FMS and used for both the system control and settings and for sending to external users.

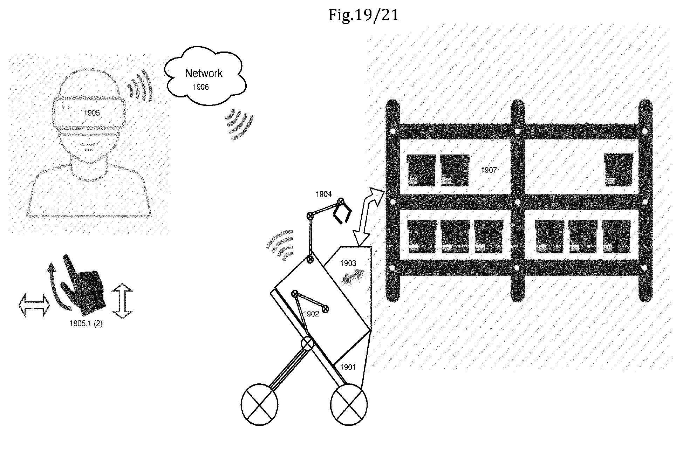

Transport services carried out by the transport unit **1901** and the module **1902** may also be auto-assistant service of performance of the remote purchases represented in **Fig. 19****/****21****.** When ordering such a service customer (individual) orders the place of supply of services (such as store outlet, in which this service may be provided) and delivery place, orders type of transport module (in this example this may be a mobile shopping cart **1903** with mechanical gripping manipulator **1904,** equipped with tactile sensors, video cameras for connecting augmented/virtual reality terminal, RFID-reader, graphic and audio interface and odors recognition sensors, but module equipment may be different), and the start of the service (time of arrival to the point of sale). After receiving the order and its authorization the FMS forms program task for the specific unit and module, which form a complex, arriving to a given point (store outlet) and transmit to the customer (via FMS or directly) confirmation of availability of the service. The customer/user, receiving confirmation and order ID, puts on VR/AR device/connects to the virtual/augmented reality terminal **1905,** runs the program for operating remote assistant (or uses the web service for this), enters the order ID in the authorization line and gains control of remote assistant via network connection **1906.** From this point, user may see and hear information from cameras and sensors of module, use module and unit voice and graphic interface to communicate with shop staff and visitors, may use available tactile sensors on the manipulator arm and sensors to detect odors for the evaluation and selection of goods, use manipulator to grab objects and move them to the cart, as well as control the movement of the unit in the outlet with the program commands and controllers **(1905.1, 1905.2).** The user only specifies the range and direction of movement of the unit, arm movements or selects an object to be captured. All actions aimed at fulfilling the will of the user/operator are performed by the complex independently on the basis of data from the sensors and actuators using algorithms (to avoid collisions, damage to property and objects and harm to people, animals and plants). The operator-user selects items from the shop range of commodities **1907,** remotely evaluates them using the augmented reality tools or the program algorithms and sends selected objects to the module cart **1903** (variant application of technology - outlet is equipped with a product selection and capture system and direct it into the module cart, associated with the customer). One of the possible embodiment of this technology involves the use of two transport modules with different functionality and modules design to perform the same task - one of them carries an automated shopping cart, and the other carries an automated mechanical complex with remote control for the VR- terminal with manipulators, grippers, sensors, mechanical and electrical drives for selection, capture of the selected product, its assessment and sending to the cart of the first module. This modules may be connected to the one single or several separated transport units or platforms. At the same time the conditions of articles sent to the cart are read from the RFID marks (or by use of other available identification method) by reader built into the module **1902,** and information about characteristics of the product, its price and special offers is displayed in the terminal or in the augmented reality display, automatically generating a chart list of items. If the selection and purchase of goods require special permission (receipt), the complex can transmit details to the seller to authenticate the electronic document and record it at the seller system. The possible embodiment of technology provides for build-in weights in the cart for estimating the weight of the selected products. After product (-s) selection procedure is completed, the operator closes the complex management session and closes the chart list, going to the purchase mode. After this the cart **1903** is closed and locked, the chart list goes to the order payment stage (optional - access to the cart is granted to the seller cashier for reading the selected products, formation of the receipt for the goods and its transmission to the buyer and for accepting and payment for goods). Buyer receive the total cost of the cart, taking into account discounts and delivery and payment options (through a virtual interface or via other available interface tool). The buyer selects the payment method, and makes payment and transaction authorization (optionally payment is automatically read from the pre-set payment method after order confirmation). After confirming the payment system notifies the outlet of making a purchase (sends receipt and a report on the purchase to the ERP/ECR system of outlet) and activates a complex program task for the delivery of the order at the place of receipt. Further actions are performed, similar to the process of shipping and receiving cargo **(Fig. 11/2).** Once the customer has received an order in the place of delivery and took the contents of the cart, the complex modules returns to the arsenal, and units returns to the base. Instead of the virtual reality terminal **1905** and the controllers **(1905.1, 1905.2)** the complex control, orientation in outlet, selection of objects, and direction of movement may be performed using smartphone/tablet screen, or computer screen, other interactive graphics and audio interface. The same system as described in the embodiment in **Fig. 19****/****21****,** but operating independently without connection of the customer/operator through the augmented reality terminal, may likewise perform an automatic order for the selection and purchase of specific items from the customer list in a particular outlet (or randomly in different retail outlets selected according to certain criteria), automatically selecting and adding to cart goods according to background characteristics from the list and fixed user preferences (taste, color, texture, size, smell, etc.). In this case, the buyer takes the formed receipt and list of the contents of the basket with the description for confirmation and payment.

To eliminate contradictions in determining the composition of the loaded cargo the module may be equipped with special built-in internal chambers, recording loaded and unloaded contents, while preserving the data in the memory of and the data in FMS database **1069.**

In addition to the part of the transport platform and independent or connected part of transport and logistics system transport and service module may be used as a multi-platform component of other trade, transportation and warehousing systems and complexes. For example it may act as part of a "smart shopping carts" **(Fg.20/21).** In this case, the transport module **2001** is equipped with basket **2002** for goods and commodities, attached to autonomous self-guided chassis **2003** that transports the cart across a trading hall or warehouse of outlet, including the mode of following the customer or the mode of shopping guide (accompanying the buyer according to their request from their location to the desired section of the outlet to the desired product and selecting the best route through the shopping outlet and being the buyer's guide in the outlet). During choice of the goods the buyer puts the goods into the module basket **2002.** After completing the purchase buyer either sends smart shopping cart to checkout/follows to the checkout to complete the purchase and settlement, or transfers through the specialized trade mobile application the order to the module for self-checkout process (including trade and payment data of the buyer contained in the mobile application) and sending the order to deliver module with cargo to the place for the final receipt of the goods (to the address of his house, a particular slot to unload the module, other options). After that, smart shopping cart closes a basket **(20.1),** blocking access to it and completes the trading session (receipt formation, payment) in automatic mode (either by the operator/cashier, blocking the funds required to pay for the purchase after confirmation of purchase). After the payment transport module with the contents is transferred auxiliary self-guided chassis to a transport unit **2004** (either directly or through an intermediate base). Transport unit according to transportation program recognized transport module and re-loaded module from chassis **2003 (20.2).** After this the transportation and operation with module are made in accordance with the embodiments described previously - for example, transport unit **2004** transport module **2001** to storage slot **2005** and load module on it **(20.3).** After delivery and loading of module to the slot was complete, transport unit **2004** continue route (to the base/depot or to the new destination according to transport program), **20.4.**

As a sub-system providing fixation and blocking **(114, Fig.01/21)** of transport modules and other elements of the system (transport units 400, storage slots for modules 751, other), can be used a pair system of elements located on the external integration platforms of the module and other elements (units, slots) and having an inverse synchronous form, in which one of the elements of the pair construction (convex) mirror the shape of the other paired element (concave), so that both elements may be inserted one into other and form a rigidly connected pair fixed by the locking mechanism of the sub-system controlled by the control unit.

**Fig. 21/21** shows an example of one of the possible embodiments of such a pair system of fixation and blocking of the module, which may be used in the described technology along with other types of fixation and blocking systems not described here.

One of the paired elements of the sub-system, convex element **2101.1** may have different geometric shapes (hemisphere, rectangle, pointed or truncated pyramid, polygon, other) and located on the integration surface **2101,** which can belong to both the transport module **100** and the element, with which the transport module will be connected and fixed. At the same time, this cap-shaped element is attached to the integration platform and the housing of the element on which it is mounted by means of the leg **2101.2** in such a way that a shoulder is formed between the cap head **2101.1** and the integration platform **2101** with a face parallel to the integration platform.

The second paired element of the fixation sub-system **2102.1** has the form of a recess mirroring the shape of the convex element **2101.1** and located on the integration surface **2102** to which the surface **2101** abuts, so that during integration of system elements (module **100** and for example slot **751)** parts **2101.1** and **2102.1** are mutually aligned, while the element **2101.1** is completely recessed into the element **2102.1,** and the integration platforms **2101** and **2102** when combined, hide the pair elements **2101.1** and **2102.1** and blocking access to them from the outside. The shapes of the elements **2101.1** and **2102.1** may have a cone-shaped, rounded or funnel-like shape for more convenient and easy interfacing of the elements with each other during integration of the module and the second element (slot, integration platform of the transport unit, etc.).

In the example **2100** for locking and gripping elements **2101.1** and **2102.1,** a locking/unlocking system may installed inside the system element in which the concave element **2102.1** is located. However, such or similar locking system may be mounted inside the convex element **2101.1.** This locking system includes bolts **2102.2** hidden in the body of the element **2102** that may be pushed outward from the apertures **2102.3** in the body of the element **2102.1** and tightened inward by the actuator **2102.4.** Actuator **2102.4** may use a mechanical, electro-mechanical, electro-magnetic system or any other method that allows the bolts **2102.2** to exit and retract from apertures **2102.3** under the control of the command system. In the event that the locking device is located inside the transport module, the control unit may be a module control unit **300** that interacts with the actuator **2102.4** through the interfaces **380.** In case where the locking device is mounted inside another element, the control of the locking system provides the command module of this system element or a separate command module of the locking device (which may be similar in design to the module command unit). In the disconnected state, the deadbolts **2102.2** are retracted into the body of their element so that they do not interfere with the free coupling of the elements **2101.1** and **2102.1.** When the elements **2101.1** and **2102.1** are mated, the command system controlling the actuator **2102.4** instructs the actuator to extend bolts **2102.2** outwards.

The command system recognizes the pairing of elements **2101.1** and **2102.1** as a result of a signal supplied from a sensor or button **2102.6** installed within element **2102.1** (or **2101.1).** The very conjugation of the elements **2101.1** and **2102.1** may occurs when the transport module **200** is moved by the unit's manipulator **640** of the unit **600 (Fig. 6/21)** to interface with the slot or when it is mounted on the transport platform **680** of the unit **600.** After the sensor has responded and the command from the command unit is activated the actuators to extending the bolts **2102.2** extends from the apertures **2102.3** and falls into the space between the head **2101.1** and the integration platform **2101,** separated by the leg **2101.2,** engaging the head **2101.1** and preventing the elements **2101.1** and **2102.1** from disassembling. During the elements disconnection, the command system instructs the actuators **2102.5** to pull the bolts **2102.2** into the body, the bolts are tightened, releasing the elements **2101.1** and **2102.1.** The bolts **2102.2** may have protrusions in the body which, after extending to the extreme positions, may be snapped by a stopper **2102.5** to secure the bolts **2102.2** in extreme positions. The shape and design of the stopper **2102.5** may be different, it may be driven by a mechanical, electro-mechanical, electro-magnetic drive controlled by the same command module that controls the bolt actuators. The bolts on the example **2100** have the shape of cones, but they may have other shapes (rectangles, triangular trapezoids, plates, etc.). The number of a bolts and their arrangement in the body of the device may vary depending on the design of the devices used and the shape of the head **2101.1** and element **2102.1.** The construction of the bolts **2102.2,** the head **2101.1,** the leg **2101.2,** of the element **2102.1** may be made of strong materials withstanding high stresses on fracture, friction, tearing and crumbling and ensuring reliable and safe coupling of elements and fastening them together in a conjugate state (for example - may be made of steel, carbon fiber, fiberglass, titanium and other alloys and materials that withstand high loads). In addition to the described in the example, the sub-system of blocking and fixation of elements may have another design and other principles of operation and conjugation of elements (electro-magnetic method, suction, adhesion, fixation by attraction, screwing, use of pivot rings as fixators, other). The number of such sub-systems installed on the module and other elements of the system may vary from one to two or more. Their location may be central, peripheral, parallel, synchronous, asynchronous and other. Within the same system, an adapter or intermediate integration platform **1805** may be used to interface elements having excellent coupler construction.

In addition to streets, bicycle and pedestrian areas, and indoor areas units (with or without modules) may be moved inside the special overpasses, which include pipelines or tunnels, laid under the urban highways and ground infrastructure (or above it) as on a Fig. 05/21**, 503.** Such overpasses may form their own hidden transport network connecting the various points of the urban environment, having their own branches, communication stations and interchanges, with integrated base stations for units and arsenals for modules and nodes that connect the dedicated transport network with the urban transport network and public infrastructure. This solution allows to separate the traffic flow of complexes and units from the city's traffic flow, to relieve the ground traffic, to speed up the transportation of modules and units, to improve traffic safety and the safety of goods, as well as reduce the cost of laying transportation routes for transporting cargo modules.

## Claims

1. System for performing multipurpose service tasks, the system comprising:
• one or more standardized transport modules (100), wherein each transport module (100) comprises:
a housing defining the shape and volume of the transport module,
a storage subsystem (111) for the secure transportation of at least one cargo unit,
a module power interface (112),
an access/lock subsystem (113) for locking and unlocking the module,
a fixation/blocking subsystem (114) for fixing and locking the transport module to a storage slot,
an encrypted identification module (115) comprising a unique ID of the transport module (100),
a module control unit (300) comprising at least the following elements which are connected to an internal system bus:
- a processor unit (310),
- a memory unit (330),
- a network interface (340) for data exchange between the module control unit and other devices and systems connected to the network,
- a controller unit (350) used to control the communication between the module control unit and peripheral devices, the peripheral devices including at least the fixation/blocking subsystem (114), the module power interface and the access/lock subsystem (113),
- a security module (370),
- a power supply unit (360), and
- an input/output interface (380),
- at least one transport unit (400) for transportation one of the transport modules (100) to a determined storage slot or from a storage slot to the place of storage and service of the module, wherein each transport unit (400) comprises:
autonomous vehicle or non-automated vehicle (410) comprising at least the following:
a command subsystem (411) for processing incoming information and building a program for management of movement and behaviour of the transport unit (400),
a sensor subsystem (412) for monitoring the state of the environment, road surface and road conditions,
an engine subsystem (413) for driving the transport unit (400),
a navigation/orientation subsystem (414) for the transport unit orientation in space,
a chassis (415),
a battery subsystem (416) for providing the electric energy,
a communication station (420) to communicate with a central fleet management system (FMS), a transport infrastructure and other autonomous units, modules and vehicles,
an integration and transportation platform (480) standardized with the transport module size, for loading, unloading and fixing the one or more standardized transport modules, wherein the integration and transportation platform (480) comprises at least one of the following elements:
module fixation subsystem (481) for fixing the transport module (100), and integration bus (482) for integration the transport module (100) with the energy and information system of the vehicle (410),
an encrypted identification module (430),
a manipulators subsystem (440) for capturing, holding and/or manipulating the transport module (100, 726),
an optional transformation subsystem (450) for transforming the transport unit (400),
a charging port (460),
an input/output interface (470),
a backup subsystem (490) improving the reliability and safety.
- a geographically distributed network of stationary located storage slots (750) for storing transport modules (100, 726), being part of the automated transportation and logistic system (700), comprising:
a computer-based Fleet Managing System (710),
a plurality of network of arsenals (720) for storage, current power supply and basic maintenance of transport modules (100, 726),
a network of bases/depots (730) for transport units (400, 736),
a plurality of service stations (740) for performing maintenance, inspection and repair of transport units (400, 736) and transport modules (100, 726),
a communication system (713, 723, 734, 74, 752B) distributed among the system (700) elements, responsible for system communication wherein each storage slot comprises means for receiving at least one transport module,
the housing of the transport module is at least partially accessible after fixing and locking the transport module (100) to the storage slot,
the fixation/blocking subsystem (114) of the transport module (100) to the storage slot and the means for receiving at least one transport module (100) are standardized within the system with respect to the size and type of the transport module (100).

2. The system according to claim 1, wherein the payload compartment (111) is in the form of basket for goods or cargo, slidable and hidable in the housing.

3. The system according to claim 1 or 2, wherein at least one transport module (100) comprises means for storing and/or generating energy and means for transmitting said energy.

4. The system according to claims 1-3, wherein at least one transport unit (400, 736) is unmanned automated vehicle (UAV) of any type.

5. The system according to any of the preceding claims, wherein elements of the system comprise a unique device ID accessible for remote reading.

6. The system, according to any of the preceding claims, wherein elements of the system comprise means for data transmission and/or storage and/or processing.

7. The system according to any of the claims from 1 to 6, where the transport unit (400, 736) is suitable for acting as a universal transport platform for transportation and delivery of many types of transport modules (100, 726).

## Patentansprüche

1. System zur Durchführung von Mehrzweck-Serviceaufgaben, wobei das System Folgendes umfasst:
• ein oder mehrere standardisierte Transportmodule (100), wobei jedes Transportmodul (100) Folgendes umfasst:
ein Gehäuse, das die Form und das Volumen des Transportmoduls definiert,
ein Lager-Subsystem (111) für den sicheren Transport von mindestens einer Ladeeinheit,
eine Modulstromschnittstelle (112),
ein Zugangs-/Verriegelungssubsystem (113) zum Verriegeln und Entriegeln des Moduls,
ein Fixier-/Blockier-Subsystem (114) zum Fixieren und Verriegeln des Transportmoduls an einem Lagerplatz,
ein verschlüsseltes Identifikationsmodul (115), das eine eindeutige ID des Transportmoduls (100) enthält,
eine Modulsteuereinheit (300), die mindestens die folgenden Elemente umfasst, die mit einem internen Systembus verbunden sind:
- eine Prozessoreinheit (310),
- eine Speichereinheit (330),
- eine Netzwerkschnittstelle (340) für den Datenaustausch zwischen der Modulsteuereinheit und anderen an das Netzwerk angeschlossenen Geräten und Systemen,
- eine Steuereinheit (350), die verwendet wird, um die Kommunikation zwischen der Modulsteuereinheit und den Peripheriegeräten zu steuern, wobei die Peripheriegeräte mindestens das Fixier-/Blockier-Subsystem (114), die Modulstromschnittstelle und das Zugangs-/Verriegelungssubsystem (113) umfassen,
- ein Sicherheitsmodul (370),
- eine Stromversorgungseinheit (360), und
- eine Eingangs-/Ausgangsschnittstelle (380),
- mindestens eine Transporteinheit (400) zum Transport eines der Transportmodule (100) zu einem bestimmten Lagerplatz oder von einem Lagerplatz zum Lager- und Einsatzort des Moduls, wobei jede Transporteinheit (400) Folgendes umfasst:
autonomes Fahrzeug oder nichtautomatisiertes Fahrzeug (410), das mindestens Folgendes umfasst:
ein Befehlssubsystem (411) zur Verarbeitung eingehender Informationen und zur Erstellung eines Programms zur Steuerung der Bewegung und des Verhaltens der Transporteinheit (400),
ein Sensor-Subsystem (412) zur Überwachung des Zustands der Umgebung, der Straßenoberfläche und der Straßenbedingungen,
ein Motor-Subsystem (413) für den Antrieb der Transporteinheit (400),
ein Navigations-/Orientierungs-Subsystem (414) für die Orientierung der Transporteinheit im Raum, ein Fahrgestell (415), ein Batterie-Subsystem (416) zur Bereitstellung der elektrischen Energie, eine Kommunikationsstation (420) zur Kommunikation mit einem zentralen Flottenmanagementsystem (FMS), einer Transportinfrastruktur und anderen autonomen Einheiten, Modulen und Fahrzeugen, eine mit der Transportmodulgröße standardisierte Integrations- und Transportplattform (480) zum Beladen, Entladen und Fixieren des einen oder der mehreren standardisierten Transportmodule, wobei die Integrations- und Transportplattform (480) mindestens eines der folgenden Elemente umfasst:
Modulfixierungssubsystem (481) zum Fixieren des Transportmoduls (100), und Integrationsbus (482) zur Integration des Transportmoduls (100) mit dem Energie- und Informationssystem des Fahrzeugs (410),
ein verschlüsseltes Identifikationsmodul (430),
ein Manipulator-Subsystem (440) zum Erfassen, Halten und/oder Manipulieren des Transportmoduls (100, 726),
ein optionales Transformationssubsystem (450) zur Transformation der Transporteinheit (400),
einen Ladeanschluss (460),
eine Eingangs-/Ausgangsschnittstelle (470),
ein Backup-Subsystem (490), das die Zuverlässigkeit und Sicherheit verbessert.
- ein geographisch verteiltes Netzwerk von stationär angeordneten Lagerplätzen (750) zur Lagerung von Transportmodulen (100, 726), die Teil des automatisierten Transport- und Logistiksystems (700) sind, welches Folgendes umfasst:
ein computergestütztes Flottenmanagementsystem (710),
mehrere vernetzte Arsenale (720) zur Lagerung, Stromversorgung und Grundwartung der Transportmodule (100, 726),
ein Netz von Stützpunkten/Depots (730) für Transporteinheiten (400, 736),
eine Vielzahl von Servicestationen (740) zur Durchführung von Wartung, Inspektion und Reparatur von Transporteinheiten (400, 736) und Transportmodulen (100, 726),
ein auf die Elemente des Systems (700) verteiltes Kommunikationssystem (713, 723, 734, 74, 752B), das für die Systemkommunikation zuständig ist, wobei jeder Lagerplatz Mittel zur Aufnahme mindestens eines Transportmoduls umfasst,
das Gehäuse des Transportmoduls nach dem Fixieren und Verriegeln des Transportmoduls (100) an dem Lagerplatz zumindest teilweise zugänglich ist,
das Fixier-/Blockier-Subsystem (114) des Transportmoduls (100) am Lagerplatz und die Mittel zur Aufnahme mindestens eines Transportmoduls (100) innerhalb des Systems in Bezug auf die Größe und den Typ des Transportmoduls (100) standardisiert sind.

2. System nach Anspruch 1, **dadurch gekennzeichnet, dass** der Nutzlastraum (111) als Korb für Güter oder Ladung ausgebildet ist, der im Gehäuse verschiebbar und versteckbar ist.

3. System nach Anspruch 1 oder 2, wobei mindestens ein Transportmodul (100) Mittel zum Speichern und/oder Erzeugen von Energie und Mittel zum Übertragen der Energie umfasst.

4. System nach einem der Ansprüche 1 bis 3, wobei mindestens eine Transporteinheit (400, 736) ein unbemanntes automatisiertes Fahrzeug (UAV) beliebigen Typs ist.

5. System nach einem der vorhergehenden Ansprüche, wobei die Elemente des Systems eine eindeutige Geräte-ID umfassen, die aus der Ferne ausgelesen werden kann.

6. System nach einem der vorhergehenden Ansprüche, wobei die Elemente des Systems Mittel zur Datenübertragung und/oder -speicherung und/oder -verarbeitung umfassen.

7. System nach einem der Ansprüche 1 bis 6, wobei die Transporteinheit (400, 736) geeignet ist, als universelle Transportplattform für den Transport und die Auslieferung vieler Arten von Transportmodulen (100, 726) zu dienen.

## Revendications

1. Un système pour effectuer des tâches de service polyvalentes, le système comprenant :
- un ou plusieurs modules de transport normalisés (100), dans lequel chaque module de transport (100) comprend :
un boîtier définissant la forme et le volume du module de transport,
un sous-système de stockage (111) pour le transport sécurisé d'au moins une unité de chargement,
une interface d'alimentation de module (112),
un sous-système d'accès/de verrouillage (113) pour verrouiller et déverrouiller le module,
un sous-système de fixation/blocage (114) pour fixer et verrouiller le module de transport à un emplacement de stockage,
un module d'identification crypté (115) comprenant un identifiant unique du module de transport (100),
une unité de commande de module (300) comprenant au moins les éléments suivants qui sont connectés à un bus de système interne :
- une unité de traitement (310),
- une unité de mémoire (330),
- une interface réseau (340) pour l'échange de données entre l'unité de commande de module et d'autres dispositifs et systèmes connectés au réseau,
- une unité de commande (350) utilisée pour commander la communication entre l'unité de commande de module et les dispositifs périphériques, les dispositifs périphériques comprenant au moins le sous-système de fixation/blocage (114), l'interface d'alimentation de module et le sous-système d'accès/de verrouillage (113),
- un module de sécurité (370),
- une unité d'alimentation électrique (360), et
- une interface d'entrée/sortie (380),
- au moins une unité de transport (400) pour transporter l'un des modules de transport (100) vers un emplacement de stockage déterminé ou d'un emplacement de stockage vers le lieu de stockage et de service du module, dans lequel chaque unité de transport (400) comprend :
un véhicule autonome ou un véhicule non autonome (410) comprenant au moins les éléments suivants ,
un sous-système de commande (411) pour traiter les informations entrantes et élaborer un programme de gestion du mouvement et du comportement de l'unité de transport (400),
un sous-système de capteurs (412) pour surveiller l'état de l'environnement, la surface de la route et les conditions routières,
un sous-système moteur (413) pour entraîner l'unité de transport (400),
un sous-système de navigation/orientation (414) pour l'orientation de l'unité de transport dans l'espace, un châssis (415), un sous-système de batterie (416) pour fournir l'énergie électrique,
une station de communication (420) pour communiquer avec un système central de gestion de flotte (FMS), une infrastructure de transport et d'autres unités, modules et véhicules autonomes,
une plate-forme d'intégration et de transport (480) normalisée en fonction de la taille du module de transport, pour charger, décharger et fixer un ou plusieurs modules de transport normalisés, dans lequel la plate-forme d'intégration et de transport (480) comprend au moins l'un des éléments suivants :
un sous-système de fixation de module (481) pour fixer le module de transport (100), et le bus d'intégration (482) pour intégrer le module de transport (100) au système d'énergie et
d'information du véhicule (410),
un module d'identification crypté (430),
un sous-système de manipulateurs (440) pour saisir, tenir et/ou manipuler le module de transport (100, 726),
un sous-système de transformation optionnel (450) pour transformer l'unité de transport (400),
un port de chargement (460),
une interface d'entrée/sortie (470),
un sous-système de secours (490) améliorant la fiabilité et la sécurité,
- un réseau géographiquement réparti d'emplacements de stockage stationnaires (750) pour le stockage de modules de transport (100, 726), faisant partie du système automatisé de transport et de logistique (700), comprenant :
un système informatisé de gestion de flotte (710),
plusieurs réseaux d'arsenaux (720) pour le stockage, l'alimentation en courant et l'entretien de base des modules de transport (100, 726),
un réseau de bases/dépôts (730) pour les unités de transport (400, 736),
plusieurs stations de service (740) pour l'entretien, l'inspection et la réparation des unités de transport (400, 736) et des modules de transport (100, 726),
un système de communication (713, 723, 734, 74, 752B) réparti entre les éléments du système (700), responsable de la communication du système, dans lequel chaque emplacement de stockage comprend des moyens pour recevoir au moins un module de transport,
le boîtier du module de transport est au moins partiellement accessible après avoir fixé et verrouillé le module de transport (100) à l'emplacement de stockage,
le sous-système de fixation/blocage (114) du module de transport (100) à l'emplacement de stockage et les moyens de réception d'au moins un module de transport (100) sont normalisés au sein du système en fonction de la taille et du type du module de transport (100).

2. Le système selon la revendication 1, dans lequel le compartiment de charge utile (111) se présente sous la forme d'un panier pour les marchandises ou la cargaison, coulissant et rétractable dans le boîtier.

3. Le système selon la revendication 1 ou 2, dans lequel au moins un module de transport (100) comprend des moyens de stockage et/ou de production d'énergie et des moyens de transmission de ladite énergie.

4. Le système selon les revendications 1 à 3, dans lequel au moins une unité de transport (400, 736) est un véhicule automatisé sans pilote (UAV) de n'importe quel type.

5. Le système selon l'une des revendications précédentes, dans lequel les éléments du système comprennent un identifiant unique du dispositif accessible pour la lecture à distance.

6. Le système, selon l'une des revendications précédentes, dans lequel les éléments du système comprennent des moyens de transmission et/ou de stockage et/ou de traitement des données.

7. Le système selon l'une des revendications 1 à 6, où l'unité de transport (400, 736) peut servir de plate-forme de transport universelle pour le transport et la livraison de nombreux types de modules de transport (100, 726).
